# FASCICULE DE BREVET EUROPEEN

(11) **EP 3 113 597 B1**
(45) Date de publication et mention de la délivrance du brevet: **18.07.2018**
(21) Numéro de dépôt: 15710827.5
(22) Date de dépôt: 20.02.2015
(51) Int. Cl.: A01B 59/06, A01B 71/06

(54) **DISPOSITIF D'ATTELAGE D'UN OUTIL TEL QU'UN OUTIL AGRICOLE, SUR UN SYSTÈME DE RELEVAGE D'UN ENGIN TEL QU'UN TRACTEUR AGRICOLE**
VORRICHTUNG ZUM ANHÄNGEN EINES WERKZEUGS, WIE ETWA EIN LANDWIRTSCHAFTLICHES WERKZEUG, AN EIN ZUGSYSTEM EINES FAHRZEUGS, WIE ETWA EIN LANDWIRTSCHAFTLICHER TRAKTOR
DEVICE FOR HITCHING A TOOL, SUCH AS AN AGRICULTURAL TOOL, ONTO A HAULING SYSTEM OF A VEHICLE SUCH AS AN AGRICULTURAL TRACTOR

(30) Priorité: 03.03.2014 FR 1400525
(43) Date de publication de la demande: 11.01.2017
(73) Titulaire: Tracto-Lock, 11400 Verdun en Lauragais (FR)
(72) Inventeur: RIBO, Romain, 11400 Verdun en Lauragais (FR)
(74) Mandataire: Cabinet Plasseraud
(86) Numéro de dépôt international: PCT/FR2015/000037
(87) Numéro de publication internationale: WO 2015/132481

(56) Documents cités:
- EP-A1- 1 637 024
- EP-A1- 1 932 411
- EP-A1- 2 389 793
- AT-U2- 6 440
- DE-A1- 3 612 322
- DE-A1- 4 132 889

## Description

L'invention concerne un dispositif d'attelage d'un outil doté d'un arbre récepteur, tel qu'un outil agricole, sur un système de relevage d'un engin, tel qu'un tracteur agricole, doté d'une prise de force.

De façon plus spécifique, l'invention vise plus particulièrement un dispositif d'attelage d'un outil tel qu' un outil agricole doté d'un arbre récepteur, sur un système de relevage d'un engin tel qu'un tracteur agricole équipé d'une prise de force, comprenant :
- deux bâtis consistant en un bâti dit d'attelage doté d'organes de fixation au système de relevage de l'engin, et en un bâti dit attelé doté d'organes de fixation à l'outil, adaptés pour s'étendre transversalement par rapport respectivement à l'engin et à l'outil, les dits bâti d'attelage et bâti attelé délimitant des faces de jonction adaptées pour permettre de les appairer et comportant des moyens de verrouillage relatif dans la dite position appairée,
- des moyens de transmission comportant :
   - des organes d'accouplement complémentaires montés respectivement sur le bâti d'attelage et sur le bâti attelé par l'intermédiaire de moyens de déplacement relatif des dits organes d'accouplement selon un axe dit longitudinal (x) perpendiculaire aux faces de jonction, adaptés pour les déplacer entre une position débrayée et une position embrayée, dans la position appairée des deux bâtis,
   - des organes de transmission de liaison des organes d'accouplement respectivement à la prise de force de l'engin et à l'arbre récepteur de l'outil.

Dans le domaine agricole, de tels dispositifs d'attelage ont pour objectif de permettre un attelage automatique d'un outil agricole sur le système de relevage trois points d'un tracteur agricole, ainsi que l'enclenchement de la prise de force du dit tracteur agricole, sans que le conducteur de ce dernier soit obligé de quitter son poste de conduite.

En vue de remplir cet objectif, de nombreuses solutions ont été proposées durant les cinquante dernières années, tels qu'en attestent notamment les brevets DE4132889, US936,708, FR2340675, DE262162, AT379048, DE3140917, FR2550910, EP0186384, EP0197026, FR2604327, FR2710490, EP1500321, WO2004/077928, GB2408669, qui constituent un simple échantillon des brevets déposés visant ces dispositifs d'attelage.

Toutefois, il s'avère que, malgré l'ancienneté des premiers dispositifs d'attelage de ce type proposés et les avantages supposés apportés par de tels dispositifs d'attelage, leur utilisation est toujours restée très confidentielle. Cette absence d'exploitation réelle résulte principalement de la conception de ces dispositifs d'attelage comportant un bâti d'attelage et un bâti attelé sur chacun desquels est solidarisé un support fixe pour le montage et le positionnement de l'organe d'accouplement associé au dit bâti. De cette conception, en effet, découlent notamment :
- une absence « d'universalité » résultant principalement de l'encombrement des organes de transmission de liaison entre l'organe d'accouplement monté sur le support fixe du bâti attelé et l'arbre récepteur de l'outil agricole, qui impose, lorsque l'outil agricole offre une faible longueur entre les dits bâti attelé et arbre récepteur, de réaliser un bâti attelé et des organes de liaison spécifiques dédiés à chaque modèle d'outil agricole,
- des problèmes de transmission de puissance résultant principalement de la nature des organes de liaison, consistant communément pour chaque bâti, en un arbre à joints de cardans, entre les bâtis et respectivement la prise de force du tracteur agricole et l'arbre récepteur de l'outil agricole, qui forment une chaine de transmission inapte à l"obtention d'une transmission correcte de puissance pour diverses positions relatives de l'outil agricole par rapport au tracteur agricole.

La présente invention vise également un dispositif d'attelage permettant un attelage automatique ainsi que l'enclenchement de la prise de force, sans que le conducteur d'un engin soit obligé de quitter son poste de conduite, et a pour principal objectif de fournir un tel dispositif d'attelage conçu pour que chaque ensemble bâti d'attelage / bâti attelé soit adaptable à tout couple engin / outil, notamment tout couple tracteur agricole / outil agricole, et garantisse une parfaite transmission de puissance pour toutes les positions relatives de l'outil par rapport à l'engin.

A cet effet, l'invention vise un dispositif d'attelage du type décrit dans le préambule ci-dessus comprenant :
- deux bâtis consistant en un bâti d'attelage doté d'organes de fixation au système de relevage de l'engin, et en un bâti attelé doté d'organes de fixation à l'outil,
- des moyens de transmission comportant des organes d'accouplement complémentaires associés à des moyens de déplacement relatif selon un axe longitudinal (x), et des organes de transmission de liaison des organes d'accouplement à la prise de force de l'engin et à l'arbre récepteur de l'outil,
et, selon l'invention, ce dispositif d'attelage se caractérise en ce que :
- les deux organes d'accouplement sont montés respectivement sur le bâti d'attelage et sur le bâti attelé de façon à être :
   - mobiles en translation selon un axe dit vertical (z) s'étendant selon une direction au moins sensiblement verticale dans une position du bâti dans laquelle la face de jonction de ce dernier s'étend dans un plan au moins sensiblement vertical,
   - libres en rotation autour d'un axe dit transversal (y) formant un repère orthogonal avec l'axe longitudinal (x) et l'axe vertical (z),
- des moyens de prépositionnement de chaque organe d'accouplement selon un axe vertical (z), sont adaptés pour :
   - maintenir, en l'absence d'accouplement entre les deux organes d'accouplement, chacun des dits organes d'accouplement dans une position prédéterminée selon l'axe vertical (z), apte à permettre leur accouplement dans la position appairée des deux bâtis,
   - permettre, dans la position accouplée des organes d'accouplement, des débattements des dits organes d'accouplement accouplés selon l'axe vertical (z), et des inclinaisons de ces derniers autour de l'axe transversal (y),
- les organes de transmission comprennent, associé à chaque organe d'accouplement, un arbre de transmission de longueur librement variable, d'une part, doté d'un organe d'articulation pour sa jonction respectivement avec la prise de force de l'engin et l'arbre récepteur de l'outil, et, d'autre part, solidarisé à l'organe d'accouplement associé.

Le dispositif d'attelage selon l'invention est donc conçu pour que les organes d'accouplement :
- soient initialement prépositionnés de façon à permettre leur accouplement dans la position appairée des deux bâtis,
- forment, après embrayage, un bloc d'un seul tenant, d'une part articulé sur la prise de force de l'engin et l'arbre récepteur de l'outil, et, d'autre part, apte à se déplacer selon un axe vertical (z) et à s'incliner autour d'un axe transversal (y), par rapport aux bâtis appairés, permettant ainsi de conférer à l'ensemble organes d'accouplement / arbres de transmission la même cinématique de mouvement que celle d'un dispositif d'attelage conçu pour l'attelage direct d'un outil sur le système d'attelage d'un engin, et plus spécifiquement d'un outil agricole sur le système de relevage trois points d'un tracteur agricole.

De ce fait, en premier lieu, le dispositif d'attelage selon l'invention consiste en un dispositif d'attelage « universel » adaptable à tout couple engin / outil et notamment à tout couple tracteur agricole / outil agricole moyennant un simple réglage de la position initiale selon l'axe vertical (z) de chacun des organes d'accouplement.

De plus, en deuxième lieu, la transmission de puissance est optimale quelle que soit la position relative et notamment l'inclinaison de l'outil par rapport à l'engin.

Selon un mode de réalisation avantageux de l'invention, les moyens de prépositionnement comportent, des moyens élastiques montés sur chaque bâti et agencés pour maintenir chaque organe d'accouplement dans une position prédéterminée selon l'axe vertical (z), de prépositionnement du dit organe d'accouplement, et pour se déformer de façon élastique en vue d'autoriser, dans leur position embrayée, les déplacements des organes d'accouplement le long de l'axe vertical (z).

Selon ce principe, le réglage de la position initiale de chaque organe d'accouplement peut être effectué en modifiant le tarage des moyens élastiques. Toutefois, de façon avantageuse selon l'invention, le dispositif d'attelage comporte des moyens de calage interchangeables adaptés pour être interposés, selon l'axe vertical (z), entre chaque bâti et les moyens élastiques de prépositionnement de chaque organe d'accouplement, en vue d'un ajustement de la hauteur de prépositionnement du dit organe d'accouplement.

Selon un mode de réalisation avantageux de l'invention, chaque organe d'accouplement est monté libre en rotation autour d'un axe vertical (z) par rapport au bâti correspondant.

De plus, selon un autre mode de réalisation avantageux de l'invention, chaque organe d'accouplement est monté libre en translation selon un axe transversal (y) par rapport au bâti correspondant, le dit bâti comportant des moyens élastiques disposés de part et d'autre du dit organe d'accouplement, selon l'axe transversal (y), de façon à le maintenir dans une position sensiblement centrée par rapport au bâti en l'absence de sollicitation transversale.

Ces deux degrés de liberté permettent d'éviter de soumettre les moyens de transmission à des sollicitations résultant des débattements latéraux et du ballant que subissent de façon usuelle les systèmes d'attelage tels que les systèmes d'attelage trois points des tracteurs agricoles.

Ces degrés de liberté autorisent, en outre, l'attelage sur un engin, d'outils comportant une transmission déportée.

Par ailleurs, selon un autre mode de réalisation avantageux de l'invention, chaque organe d'accouplement est monté rotatif dans un bloc-support, au moins un des dits blocs supports étant scindé en un support fixe en translation selon l'axe longitudinal (x) et en un support mobile en translation selon l'axe longitudinal (x), dans lequel est monté rotatif l'organe d'accouplement associé, les moyens de déplacement relatif des organes d'accouplement consistant en des moyens de déplacement en translation de chacun des dits supports mobiles.

De plus, selon une première variante avantageuse de réalisation, les deux blocs supports sont scindés en un support fixe en translation selon l'axe longitudinal (x) et en un support mobile en translation selon l'axe longitudinal (x). Dans ce cas, en outre, les moyens de déplacement relatif des organes d'accouplement comprennent :
- un actionneur fluidique de déplacement du support mobile du bloc support de l'organe d'accouplement monté sur le bâti d'attelage,
- des moyens élastiques positionnés entre le support fixe et le support mobile du bloc support de l'organe d'accouplement monté sur le bâti attelé.

Une telle conception associant un actionneur fluidique pour le déplacement d'un des organes d'accouplement et des moyens élastiques pour solliciter l'autre organe d'accouplement vers sa position embrayée, permet d'absorber les éventuelles fluctuations de longueur des arbres de transmission.

Selon une deuxième variante avantageuse de réalisation permettant l'absorption des fluctuations de longueur des arbres de transmission, seul le bloc support de l'organe d'accouplement monté sur le bâti d'attelage est scindé en un support fixe en translation selon l'axe longitudinal (x) et en un support mobile en translation selon l'axe longitudinal (x), et les moyens de déplacement relatif des organes d'accouplement comprennent, alors, un actionneur fluidique associé à un accumulateur fluidique.

Par ailleurs, de façon avantageuse selon l'invention, chaque bloc support est monté libre en rotation autour d'un des deux axes suivants, axe vertical (z) ou axe transversal (y), à l'intérieur d'une cage annulaire mobile en translation selon un axe vertical (z) et libre en rotation autour du second des deux axes, axe transversal (y) ou axe vertical (z), par rapport au bâti correspondant.

Selon ce principe, et selon une première variante avantageuse de réalisation, chaque bloc support est monté libre en rotation autour d'un axe transversal (y) à l'intérieur de la cage annulaire, et chaque cage annulaire est montée libre en rotation autour d'un axe vertical (z) relativement à deux pivots :
- libres en translation chacun le long d'une traverse d'un cadre doté de montants montés coulissants le long de colonnes s'étendant selon des axes verticaux (z), solidaires du bâti correspondant,
- maintenus dans une position centrée entre les deux montants au moyen de ressorts disposés autour des traverses de part et d'autre des dits pivots.

Selon cette première variante, en outre, le dispositif d'attelage selon l'invention comprend avantageusement des moyens de maintien du bloc-support de l'organe d'accouplement monté sur le bâti attelé dans une position stable au moins sensiblement axée par rapport à l'axe longitudinal (x), dans la position débrayée du dit organe d'accouplement, les dits moyens de maintien comprenant :
- un ensemble mobile selon l'axe longitudinal (x) relativement au bloc-support, lié en rotation au dit bloc-support, et comportant, disposées de part et d'autre de la cage annulaire et reliées par des organes de liaison longitudinaux,
   - une pièce frontale escamotable agencée pour être repoussée par l'organe d'accouplement monté sur le bâti d'attelage, lors du déplacement de ce dernier vers la position embrayée des organes d'accouplement,
   - une plaque de butée agencée de façon à être accolée en butée contre la cage annulaire et à interdire le pivotement de l'ensemble mobile et du bloc-support relativement à la dite cage annulaire, dans la position débrayée des organes d'accouplement, et pour se trouver écartée de la cage annulaire d'une distance autorisant les pivotements du bloc-support, dans la position embrayée des dits organes d'accouplement,
- des moyens élastiques disposés de façon solliciter l'ensemble mobile vers sa position de stabilisation en rotation du bloc-support par rapport à la cage annulaire, et pour autoriser le déplacement du dit ensemble mobile lors du déplacement de l'organe d'accouplement monté sur le bâti d'attelage vers la position embrayée des organes d'accouplement.

De tels moyens de maintien permettent de maintenir, dans la position dételée de l'outil, l'organe d'accouplement monté sur le bâti attelé dans une position stable au moins sensiblement axée par rapport à l'axe longitudinal (x), qui garantit, lors de l'attelage, l'alignement et l'accouplement de cet organe avec l'organe d'accouplement monté sur le bâti d'attelage.

De plus, selon un mode de réalisation avantageux visant ces moyens de maintien, la pièce frontale escamotable est agencée de façon à être maintenue, par les moyens élastiques de l'ensemble mobile, dans une position écartée du support mobile du bloc support de l'organe d'accouplement monté sur le bâti attelé, et pour être repoussée jusqu'à une position de butée contre le dit support mobile.

Ainsi, le déploiement de l'actionneur fluidique qui provoque le déplacement de l'organe d'accouplement monté sur le bâti d'attelage, entraîne :
- dans un premier temps, un recul de la pièce frontale escamotable qui conduit à décoller la plaque de butée de la cage annulaire et à annihiler l'action de blocage de cette plaque de butée,
- dans un second temps, une compression des moyens élastiques assurant une fonction d'amortisseur pour le support mobile du bloc support de l'organe d'accouplement monté sur le bâti attelé.

Selon une deuxième variante avantageuse de réalisation relative au principe de montage des blocs supports dans des cages annulaires, chaque bloc support est monté libre en rotation autour d'un axe vertical (z) à l'intérieur d'une cage annulaire, et chaque cage annulaire comporte deux arbres supports coaxiaux montés libres en rotation autour d'un axe transversal (y) par rapport au bâti correspondant, s'étendant latéralement selon un même axe transversal (y) de part et d'autre de la dite cage annulaire, et autour de chacun desquels est disposé un ressort de rappel de la cage annulaire vers sa position sensiblement centrée par rapport au bâti.

De plus, selon l'invention, chaque cage annulaire est, alors, avantageusement disposée dans un cadre doté de montants dans chacun desquels est monté rotatif un arbre support de la dite cage annulaire, les dits montants étant montés coulissants le long de rails s'étendant selon des axes verticaux (z), solidaires du bâti correspondant.

Par ailleurs, les organes d'accouplement consistent avantageusement, selon l'invention, en des organes d'accouplement par crabotage dotés de détrompeurs adaptés pour permettre de garantir, lors de l'accouplement des dits organes d'accouplement, la coïncidence angulaire entre les organes, tels que classiquement des joints de cardan, de jonction avec la prise de force de l'engin et l'arbre récepteur de l'outil.

Ces organes d'accouplement présentent, en outre, avantageusement, selon l'invention, la forme de couronnes dentées dotées d'une face frontale dans laquelle sont ménagées des dents d'accouplement.

De plus, lorsque le dispositif d'attelage comporte des moyens de maintien du bloc-support de l'organe d'accouplement monté sur le bâti attelé, en vue de parfaire l'alignement des organes d'accouplement lors d'une procédure d'attelage, et de façon avantageuse selon l'invention :
- la pièce frontale escamotable des dits moyens de maintien consiste en un cône de centrage mâle ou femelle doté d'une base adaptée pour ceinturer la couronne dentée de l'organe d'accouplement monté sur le bâti attelé,
- l'organe d'accouplement monté sur le bâti d'attelage comporte un cône de centrage complémentaire, femelle ou mâle, doté d'une base ceinturant la couronne dentée du dit organe d'accouplement, adapté pour coopérer et repousser le cône de centrage du bâti attelé.

Una variante de réalisation visant à garantir l'alignement des organes d'accouplement lors du déplacement relatif de ces derniers, consiste, avantageusement selon l'invention, à équiper un des organes d'accouplement d'un cône de centrage, dit externe, doté d'une base ceinturant la couronne dentée constitutive du dit organe d'accouplement, adapté pour assurer le guidage externe et le centrage de l'autre organe d'accouplement lors de l'embrayage des dits organes d'accouplement.

Dans le même but, une des couronnes dentées constitutive d'un organe d'accouplement présente avantageusement, selon l'invention, une zone centrale dans le prolongement axial de laquelle s'étend un cône de centrage, dit interne, et la seconde couronne dentée présente, quant à elle, avantageusement une zone centrale évidée délimitant un alésage longitudinal de forme conique conjuguée de celle du cône de centrage interne, adaptée pour assurer le guidage et le centrage du dit cône de centrage interne.

Le cône de centrage interne comporte, par ailleurs, avantageusement une base cylindrique dans le prolongement de la couronne dentée associée, adaptée pour former une portée cylindrique pour un tronçon d'extrémité cylindrique de l'alésage délimité par l'autre couronne dentée.

Une telle portée cylindrique a pour but d'éviter aux organes d'accouplement de s'écarter l'un de l'autre par pivotement de leurs faces de jonction autour d'un axe transversal, lorsqu'il est nécessaire, en vue de l'embrayage, de relever le système de relevage de l'engin (cas notamment d'un outil dont les organes entraînés par l'arbre de transmission reposent sur le sol et doivent donc être décollés du sol en vue de l'embrayage des deux organes d'accouplement).

Selon un autre mode de réalisation avantageux de l'invention, chaque arbre de transmission consiste en un arbre télescopique composé de deux éléments télescopiques consistant en :
- un élément, dit élément mâle, équipé d'un organe d'articulation pour la jonction avec respectivement la prise de force de l'engin et l'arbre récepteur de l'outil,
- un élément, dit élément femelle, formant, en outre, l'organe d'accouplement.

De plus, chaque élément télescopique mâle consiste avantageusement en un arbre cannelé, et chaque élément télescopique femelle consiste avantageusement en une douille cannelée d'un seul tenant avec la couronne dentée formant l'organe d'accouplement associé.

D'autres caractéristiques buts et avantages de l'invention ressortiront de la description détaillée qui suit en référence aux dessins annexés qui en représentent à titre d'exemples non limitatifs deux modes de réalisation préférentiels. Sur ces dessins :
- la figure 1 est une vue en perspective schématique d'un tracteur agricole et d'un outil agricole représentés de façon très schématique, équipés d'une première variante de réalisation d'un dispositif d'attelage conforme à l'invention,
- la figure 2 est une deuxième vue en perspective de cette première variante de réalisation de dispositif d'attelage, sur laquelle le tracteur agricole n'est pas représenté,
- la figure 3 est une vue en perspective du bâti d'attelage de cette première variante de réalisation, équipé de ses moyens de transmission, monté sur le système de relevage d'un tracteur agricole représenté de façon très schématique,
- la figure 4 est une vue en perspective du bâti attelé de cette première variante de réalisation, équipé de ses moyens de transmission, monté sur un outil agricole représenté de façon très schématique,
- la figure 5 est une vue en perspective du bâti d'attelage de cette première variante de réalisation,
- la figure 6 est une vue en perspective du bâti attelé de cette première variante de réalisation,
- la figure 7 est une vue en perspective, avec certains éléments cachés ou représentés en transparence, des organes d'accouplement de cette première variante de réalisation de dispositif d'attelage, de leurs blocs-supports et de leurs moyens de déplacement relatif en translation, dans la position embrayée des dits organes d'accouplement,
- les figures 8 et 9 sont des vues en perspective respectivement de l'organe d'accouplement du bâti d'attelage (figure 8) et de l'organe d'accouplement du bâti attelé (figure 9), de cette première variante de réalisation,
- les figures 10 et 11 sont deux vues en perspective des moyens de transmission d'un bâti d'attelage conformes à cette première variante de réalisation,
- les figures 12 et 13 sont deux vues en perspective représentant de façon dissociée, le bloc-support de l'organe d'accouplement des moyens de transmission du bâti d'attelage de cette première variante de réalisation (figure 12), et le cône de centrage externe des dits moyens de transmission (figure 13),
- les figures 14 et 15 sont deux vues en perspective des moyens de transmission du bâti attelé de cette première variante de réalisation,
- les figures 16 et 17 sont deux vues en perspective représentant le bloc-support de l'organe d'accouplement des moyens de transmission du bâti attelé de cette première variante de réalisation,
- les figures 18 à 20 sont des vues longitudinales, pour trois postions différentes du système de relevage trois points, d'un tracteur agricole et d'un outil agricole, représentés de façon très schématique, équipés de cette première variante de réalisation de dispositif d'attelage,
- la figure 21 est une vue de dessus partielle, dans leur position appairée, du bâti d'attelage et du bâti attelé de cette première variante de réalisation, représentant les moyens de transmission embrayés lors d'un mouvement de ballant du système de relevage trois points,
- la figure 22 est une vue en perspective du bâti d'attelage d'une deuxième variante de réalisation d'un dispositif d'attelage conforme à l'invention,
- la figure 23 est une vue en perspective du bâti attelé de cette deuxième variante de réalisation de dispositif d'attelage conforme à l'invention,
- les figures 24 et 25 sont deux vues en perspective des moyens de transmission du bâti d'attelage conformes à cette deuxième variante de réalisation,
- les figures 26a et 27 sont deux vues en perspective, avec certains éléments cachés, des moyens de transmission du bâti attelé conformes à cette deuxième variante de réalisation,
- et la figure 26b est une vue de détail à échelle agrandie de la figure 26a.

(Dans la description qui suit, le repère orthogonal (x, y, z) correspond au repère tel que défini dans les revendications et le préambule de la présente demande de brevet, c'est-à-dire un repère défini en se référant à une position dans laquelle la face de jonction des bâtis s'étend dans un plan vertical. Les termes vertical, horizontal et transversal, notamment, sont donc utilisés avec comme référence ce repère orthogonal.

De plus, à des fins de simplicité et de clarté de la description, les dispositifs d'attelage selon l'invention sont décrits ci-dessous en les considérant solidarisés à un tracteur agricole et un outil agricole reposant sur le sol, les termes inférieur, supérieur... étant utilisés par référence à un tel positionnement. En outre les termes avant, arrière sont utilisés en référence au sens de déplacement en marche avant du tracteur agricole).

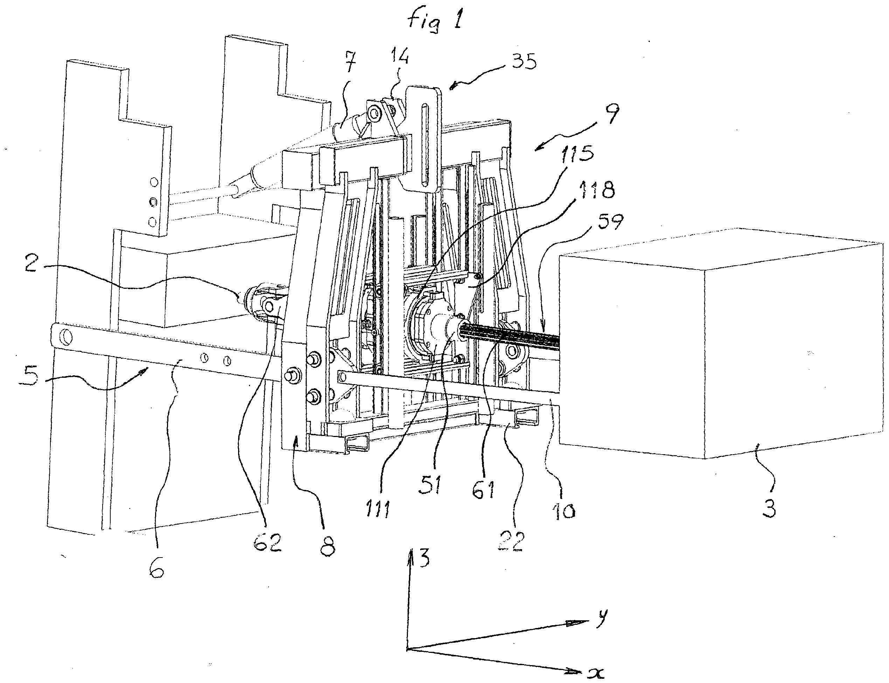

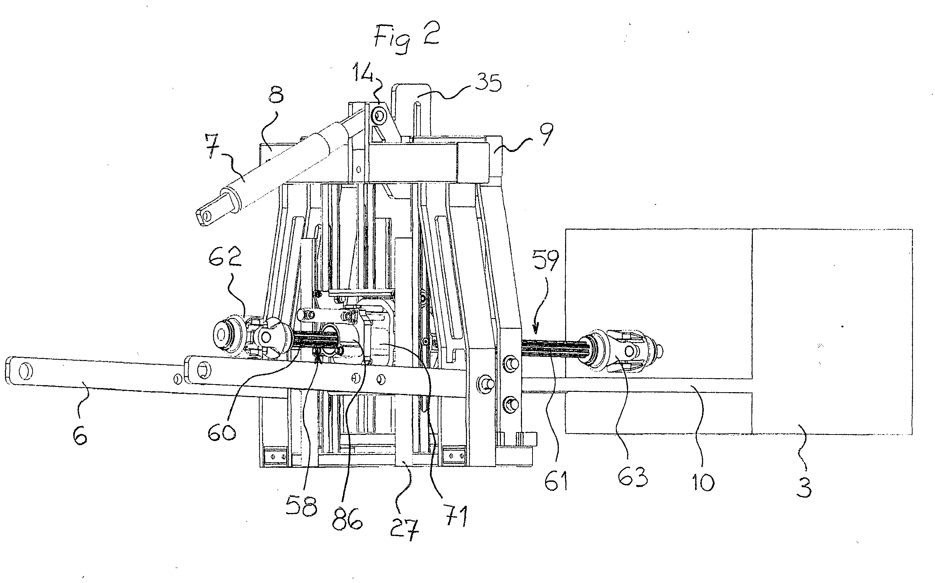

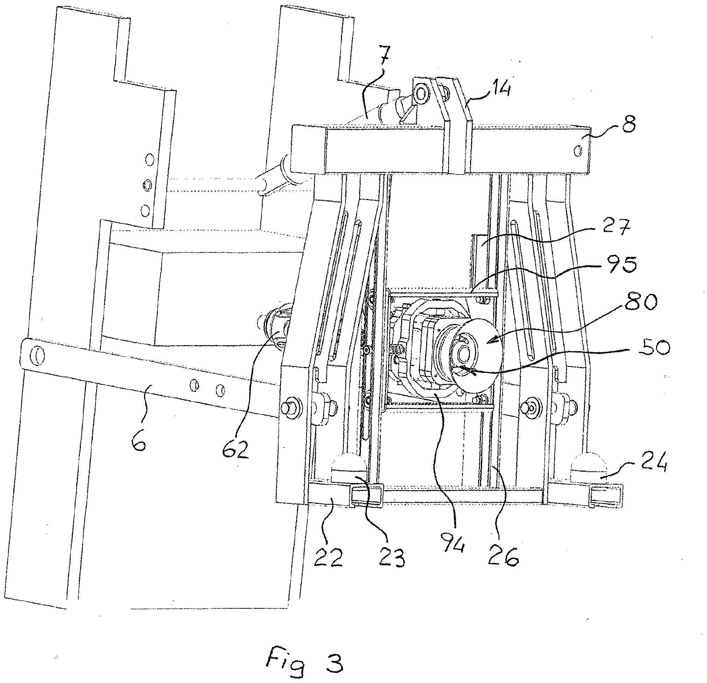

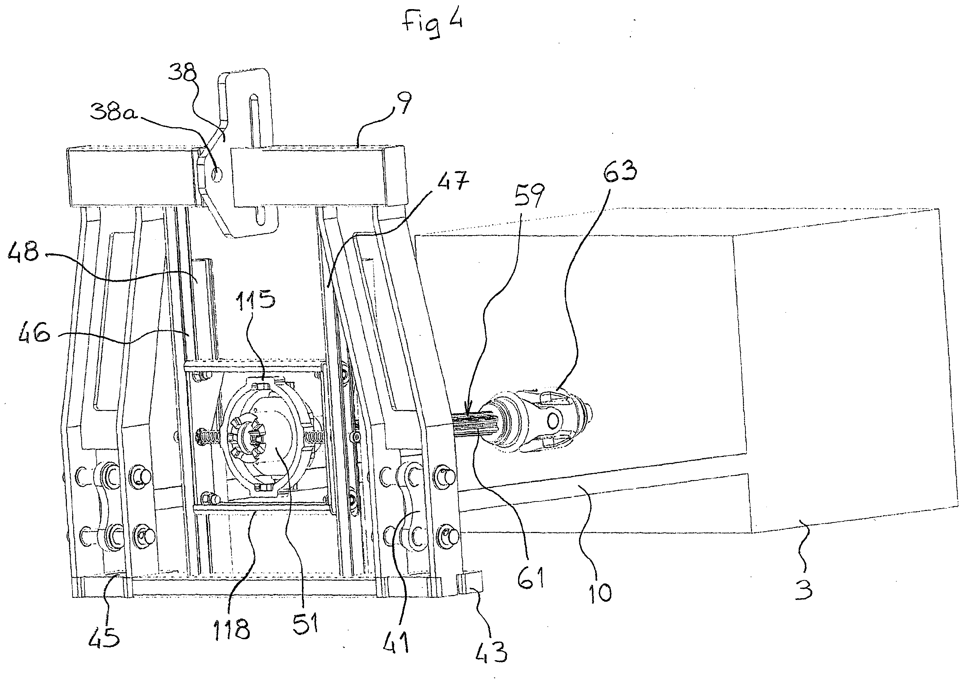

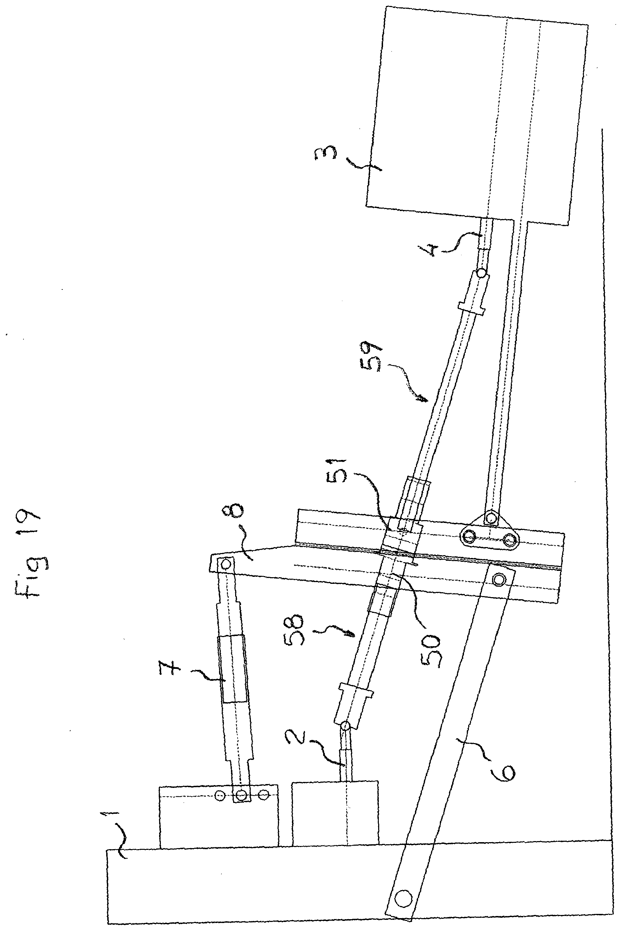

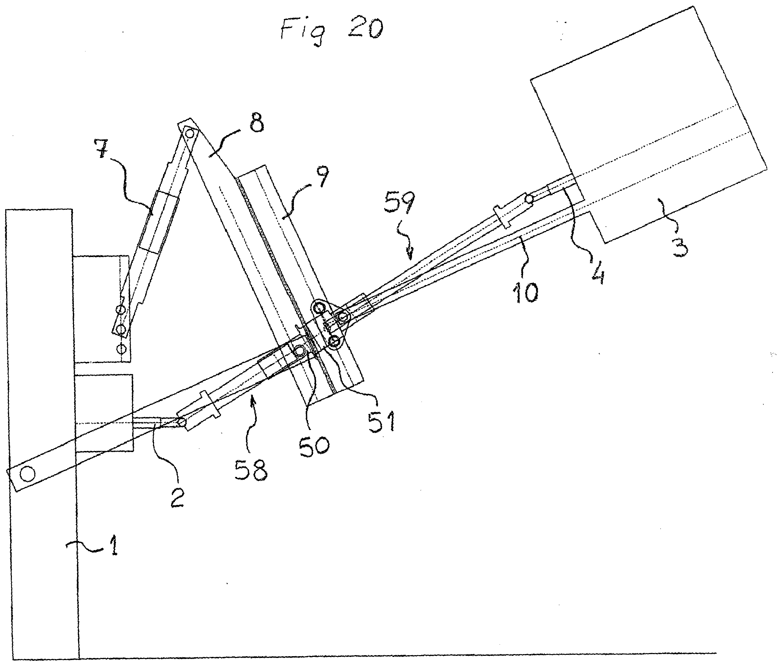

Les dispositifs d'attelage représentés à titre d'exemples aux figures consistent en des dispositifs d'attelage d'un outil agricole 3 doté d'un arbre récepteur 4, sur le système de relevage trois points 5 d'un tracteur agricole 1 doté d'une prise de force 2, les dits tracteur agricole, outil agricole et système de relevage étant représentés de façon très schématique aux figures 1 à 4 et 18 à 20. Ainsi, notamment, concernant le système de relevage, seuls sont représentés les éléments de jonction de ce dernier avec le dispositif d'attelage selon l'invention, à savoir : deux bras inférieurs latéraux tels que 6 et un bras central supérieur constitué en l'exemple d'un vérin hydraulique 7.

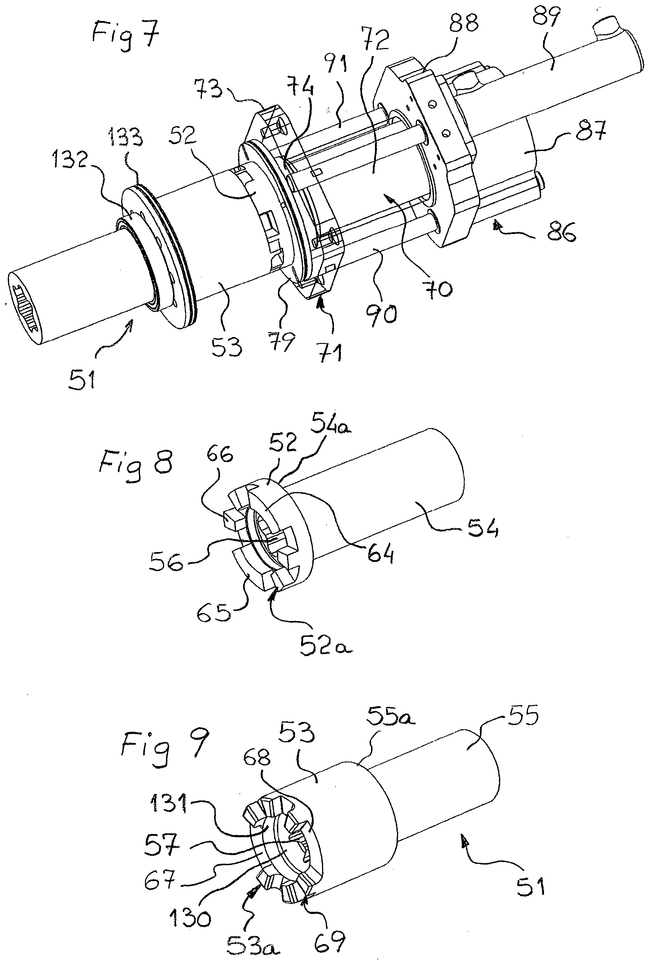

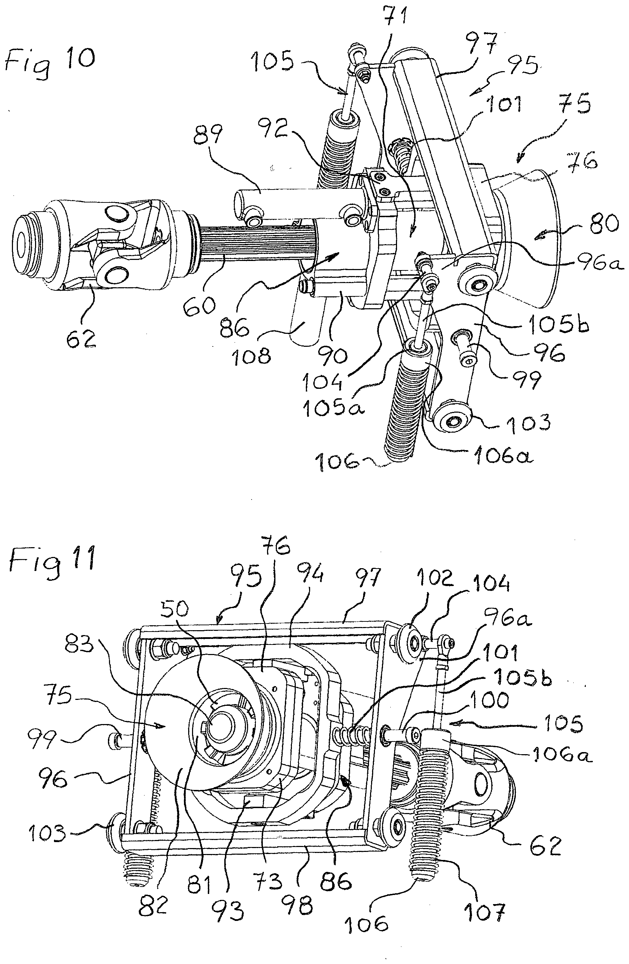

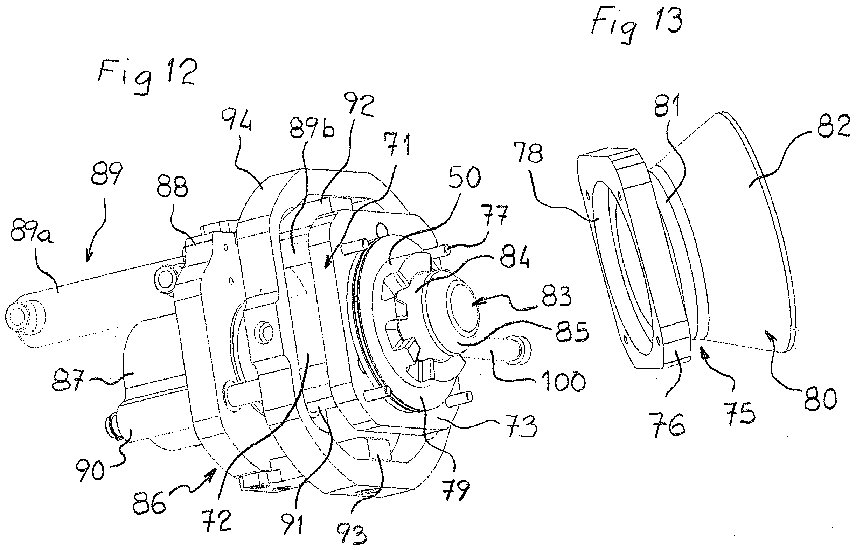

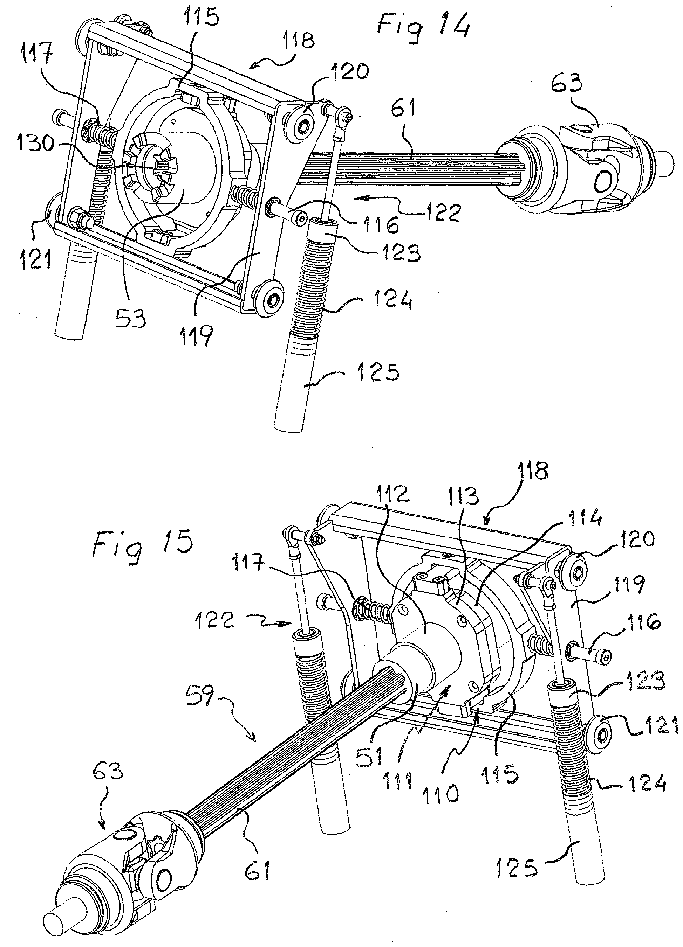

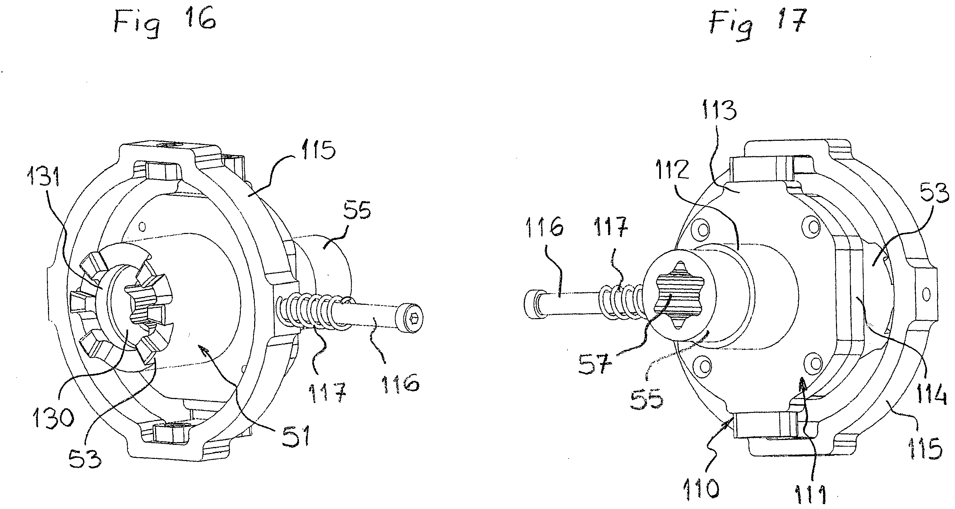

En premier lieu, le dispositif d'attelage représenté aux figures 1 à 21 se compose d'un bâti d'attelage 8 adapté pour être monté sur le système de relevage 2 du tracteur agricole 1, et d'un bâti attelé 9 adapté pour être monté sur l'outil agricole 3 au moyen de deux bras inférieurs latéraux tels que 10 et d'un bras supérieur central (non représenté aux figures), les dits bâtis étant dotés de :
- moyens de verrouillage aptes à les maintenir verrouillés dans une position d'attelage où ils se trouvent accolés,
- moyens de transmission pour l'accouplement de l'arbre récepteur 4 de l'outil agricole 3 à la prise de force 2 du tracteur agricole 1.

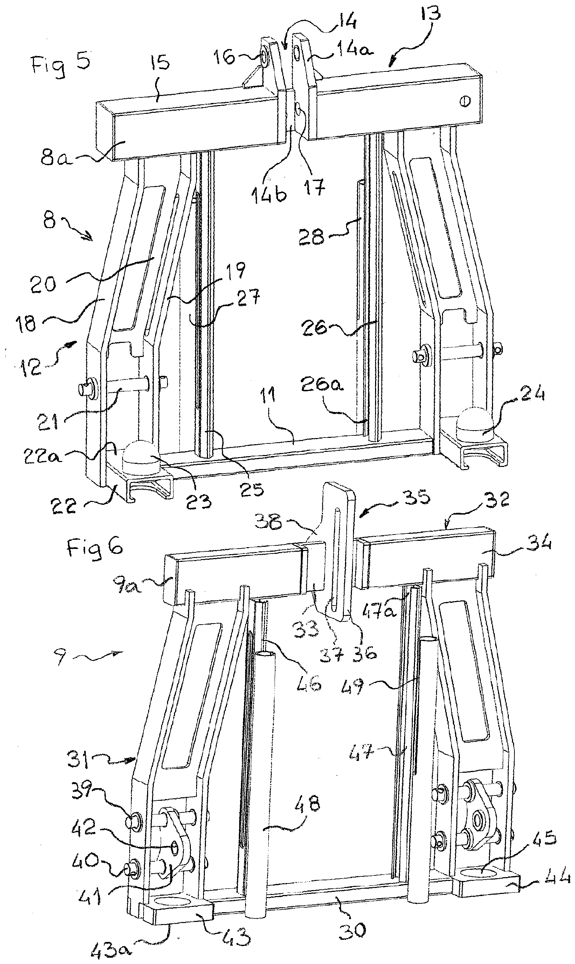

En premier lieu, tel que notamment représenté à la figure 5, le bâti d'attelage 8 de ce dispositif d'attelage présente une forme générale trapézoïdale dotée d'une face frontale plane 8a de contact avec le bâti attelé 9 du dit dispositif d'attelage. Ce bâti d'attelage 8 consiste en une structure mécano-soudée destinée à être habillée de plaques frontales non représentées, et composée d'une traverse inférieure 11 s'étendant entre les extrémités inférieures de deux montants tels que 12 entre les extrémités supérieures desquels s'étend une traverse supérieure 13.

La traverse supérieure 13 est, en outre, divisée en trois tronçons consistant en une chape centrale 14 formée de deux ailes longitudinales 14a réunies par une âme transversale 14b, par rapport à chacune desquelles s'étend un tronçon d'extrémité 15 formé d'un profilé tubulaire.

De plus, les deux ailes 14a de la chape centrale 14 présentent une hauteur supérieure à la hauteur des profilés tubulaires 15, et possèdent ainsi des portions de surface s'étendant dans le prolongement de la face supérieure des dits profilés, dans chacune desquelles sont percés en vis-à-vis des orifices 16 destinés à loger un axe transversal constituant l'organe d'accrochage du bras central 7 du système de relevage 5.

De plus, un des profilés tubulaires 15 de cette traverse supérieure 13 loge un vérin hydraulique (non représenté) agencé de façon que sa tige puisse être déployée dans la chape 14 au travers d'un orifice 17 ménagé dans l'aile 14a obstruant la face d'extrémité centrale du dit profilé tubulaire.

Les deux montants 12 sont, quant à eux, constitués de deux fers plats parallèles 18, 19 pliés de façon à présenter un profil longitudinal coudé conférant au bâti d'attelage 8 sa forme trapézoïdale, les dits fers plats étant reliés, sensiblement sur les deux tiers de leur portion supérieure, par une entretoise 20 leur conférant une section en forme de H.

De plus, chacun de ces montants 12 loge, dans sa portion inférieure dépourvue d'entretoise 20, un axe 21 s'étendant entre les deux fers plats 18, 19, formant l'organe d'accrochage du bâti d'attelage 8 sur chaque bras inférieur 6 du système de relevage 5.

Ce bâti d'attelage 8 comporte, par ailleurs, deux semelles telles que 22 dotées de faces supérieures planes de contact 22a, logées et fixées chacune entre les extrémités inférieures des fers plats 18, 19 d'un montant 12, de façon à s'étendre dans le prolongement de la traverse inférieure 11.

Le bâti d'attelage 8 comporte, en outre, deux pions de centrage 23, 24 s'étendant en saillie chacun sur la face plane de contact 22a d'une semelle 22, et comportant, chacun une base cylindrique prolongée d'un tronçon hémisphérique.

Le bâti d'attelage 8 comporte, par ailleurs, deux rails verticaux parallèles 25, 26 s'étendant entre la traverse inférieure 11 et la traverse supérieure 13, dotés, en vis-à-vis, de conduits de guidage tels que 26a pour des roulettes décrites en détail plus loin.

Ce bâti d'attelage 8 comporte, enfin, accolés chacun à un rail de guidage 25, 26 de façon à s'étendre parallèlement au dit rail de guidage, à l'avant du bâti d'attelage 8, deux tubes verticaux tels que 27 dotés en vis-à-vis, sur sensiblement la moitié de leur longueur, d'une fente longitudinale telle que 28 s'étendant depuis leur extrémité supérieure.

Tel que notamment représenté à la figure 6, le bâti attelé 9 du dispositif de relevage présente également une forme générale trapézoïdale dotée d'une face frontale plane 9a de contact avec le bâti d'attelage 8 du dit dispositif d'attelage. Ce bâti attelé 9 consiste en une structure mécano-soudée composée d'une traverse inférieure 30 s'étendant entre les extrémités inférieures de deux montants tels que 31 entre les extrémités supérieures desquels s'étend une traverse supérieure 32.

Cette traverse supérieure 32 est divisée en trois tronçons consistant en une platine centrale transversale 33 de part et d'autre de laquelle s'étend un profilé tubulaire 34.

La platine centrale 33 sert, en outre, de support de fixation d'une plaque 35 de fixation du bâti attelé 9 sur l'extrémité du bras supérieur central de liaison avec l'outil agricole 3, comportant, en vue de cette fixation, une lumière verticale au travers de laquelle s'étend la dite platine centrale.

En vue de la liaison avec l'outil agricole 3, cette plaque de liaison 35 comporte une portion postérieure 36 dans laquelle est ménagée une lumière verticale 37 destinée à loger un axe de fixation porté le bras supérieur central.

La plaque de liaison 35 comporte également une portion antérieure 38 adaptée pour s'insérer dans la chape 14 du bâti d'attelage 8, percée d'un orifice 38a ménagé de façon à coïncider avec l'orifice 17, dans la position appairée des deux bâtis 8, 9, de façon à entraîner le verrouillage relatif des dits bâtis par déploiement de la tige du vérin logé dans un des profilés tubulaires 15 de la traverse supérieure 13 du dit bâti d'attelage.

Les deux montants 31 de ce bâti attelé 9 sont similaires à ceux du bâti d'attelage 8 et sont donc constitués de deux fers plats parallèles pliés de façon à présenter un profil longitudinal coudé conférant au bâti attelé 9 sa forme trapézoïdale, les dits fers plats étant reliés, sensiblement sur les deux tiers de leur portion supérieure, par une entretoise leur conférant une section en forme de H.

De plus, chacun de ces montants 31 loge, dans sa portion inférieure dépourvue d'entretoise, deux axes superposés 39, 40 s'étendant entre les deux fers plats, formant les tiges de guidage d'un coulisseau 41 agencé pour se déplacer le long des dits axes sur une course correspondant à la largeur des dits montants.

Chaque coulisseau 41 constitue une pièce de fixation du bâti attelé 9 sur l'extrémité d'un des bras inférieurs 6, et en vue de cette liaison, ce coulisseau 41 est percé d'un orifice 42 destiné à loger un axe de fixation porté par le dit bras inférieur.

Le bâti attelé 9 comporte, par ailleurs, deux semelles 43, 44 dotées de faces inférieures planes de contact 43a, logées et fixées chacune entre les extrémités inférieures des fers plats d'un montant 31, de façon à s'étendre dans le prolongement de la traverse inférieure 30.

Chacune de ces semelles 43, 44 est percée d'un orifice circulaire 45, d'une part, d'un diamètre conjugué du diamètre de la base des pions de centrage 23, 24, et d'autre part présentant une fraisure (non représentée) au niveau de sa jonction avec la face de contact 43a.

De même que le bâti d'attelage 8, le bâti attelé 9 comporte, par ailleurs, deux rails verticaux parallèles 46, 47 s'étendant entre la traverse inférieure 30 et la traverse supérieure 32, dotés, en vis-à-vis, de conduits de guidage tels que 47a pour des roulettes décrites en détail plus loin.

Ce bâti attelé 9 comporte également, accolés chacun à un rail de guidage 46, 47 de façon à s'étendre parallèlement au dit rail de guidage, à l'arrière du bâti attelé 9, deux tubes verticaux tels que 48 dotés en vis-à-vis, sur sensiblement la moitié de leur longueur, d'un fente longitudinale telle que 49 s'étendant depuis leur extrémité supérieure.

Les moyens de transmission de ce dispositif d'attelage comprennent, quant à eux, des organes d'accouplement complémentaires montés respectivement sur le bâti d'attelage 8 et sur le bâti attelé 9, et des organes de transmission de liaison des dits organes d'accouplement respectivement à la prise de force 2 du tracteur agricole 1 et à l'arbre récepteur 4 de l'outil agricole 3.

En premier lieu, les organes d'accouplement 50, 51 consistent en des organes d'accouplement par crabotage.

Ces organes d'accouplement 50, 51 comportent chacun une couronne dentée 52, 53 dotée d'une face frontale 52a, 53a dans laquelle sont ménagées, de façon usuelle, des dents d'accouplement séparées par des crans, chacune des dites couronnes formant un tronçon d'extrémité de plus grand diamètre d'un arbre tubulaire 54 55, séparé de ce dernier par un épaulement radial 54a, 55a.

Chacun de ces organes d'accouplement 50, 51 est, en outre, percé d'un alésage cannelé 56, 57 présentant par exemple une section en forme d'étoile, et constitue l'élément femelle d'un arbre de transmission télescopique 58, 59 dont l'élément mâle consiste en un arbre cannelé 60, 61 équipé d'un joint de cardan 62, 63 de raccordement respectivement à la prise de force 2 du tracteur agricole 1 et à l'arbre récepteur 4 de l'outil agricole 3.

De plus, l'alésage 57 de l'organe d'accouplement 51 associé au bâti attelé 9 comporte un tronçon d'extrémité 131 de forme cylindrique au niveau de sa jonction avec la face frontale 53a de la couronne dentée 53, relié à la portion cannelé du dit alésage , par un tronçon de forme tronconique 130, les dits tronçons d'extrémité 130, 131 étant adaptés pour loger un organe de centrage décrit plus loin.

Ainsi, les moyens de transmission comportent simplement, pour chaque bâti 8, 9 :
- un arbre cannelé 60, respectivement 61, constituant l'élément télescopique mâle d'un arbre de transmission 58, respectivement 59, équipé d'un joint de cardan 62, respectivement 63,
- une organe d'accouplement 50, respectivement 51, constitué, d'un seul tenant, d'un arbre tubulaire 54, respectivement 55, formant l'élément télescopique femelle de l'arbre de transmission 58, respectivement 59, et d'une couronne dentée 52, respectivement 53, formant l'élément d'accouplement par crabotage des moyens de transmission.

Les organes d'accouplement sont également dotés d'un système de détrompage adapté pour garantir la coïncidence angulaire entre les joints de cardan 62, 63. En l'exemple, ce système de détrompage consiste :
- pour l'organe d'accouplement 50 du bâti d'attelage 8, en deux dents 64, 65 diamétralement opposées de même longueur, supérieure à celle des autres dents telles que 66,
- pour l'organe d'accouplement 51 du bâti attelé 9, en deux crans 67, 68 diamétralement opposés de longueurs conjuguées de celles des deux dents de détrompage 64, 65, supérieures à la longueur des autres crans tels que 69.

De plus, les dents telles que 64-66 et les crans tels que 67-69 présentent classiquement des faces latérales combinant des dépouilles et des contre-dépouilles adaptées pour s'opposer au désaccouplement des organes d'accouplement 50, 51 lors de leur rotation dans leur état embrayé.

En outre, les dents telles que 64-66 comportent des arêtes radiales chanfreinées destinées à faciliter l'introduction des dites dents dans les crans 67-69 de l'organe d'accouplement 50, 51 en vis-à-vis.

Ces organes d'accouplement 50, 51 sont montés sur les bâtis 8, 9 :
- libres en rotation autour d'un axe longitudinal (x) en vue de l'entraînement en rotation de l'arbre récepteur 4 de l'outil agricole 3,
- mobiles en translation selon l'axe longitudinal (x) relativement l'un par rapport à l'autre entre une position débrayée et une position embrayée,
- et, selon l'invention, mobiles en translation selon un axe vertical (z) et un axe transversal (y), et libres en rotation autour d'un axe transversal (y) et autour d'un axe vertical (z).

A cet effet, l'organe d'accouplement 50 du bâti d'attelage 8 est, en premier lieu, monté libre en rotation autour de l'axe longitudinal (x) à l'intérieur d'un support 70, dit mobile, composé de deux éléments solidarisés dans le prolongement l'un de l'autre :
- un premier élément antérieur 71 comportant un manchon cylindrique 72 délimitant un alésage longitudinal adapté pour loger l'arbre tubulaire 54, prolongé d'un flasque frontal postérieur 73 dans lequel est ménagé un lamage dans lequel débouche l'alésage du manchon cylindrique 72, logeant un roulement radial 74,
- un second élément postérieur 75 comportant, d'un seul tenant :
   - un flasque frontal antérieur 76 adapté pour être solidarisé avec le flasque postérieur 73 au moyen de vis telles que 77, percé d'un orifice circulaire de diamètre supérieur à celui de la couronne dentée 52, débouchant dans sa face antérieure d'assemblage par un lamage 78 logeant un roulement axial 79, du type butée à aiguilles, de butée axiale de la couronne dentée 52, agencé pour présenter une portée d'appui axial contre la cage interne du roulement radial 74d,
   - un élément de centrage externe 80 doté d'une base annulaire cylindrique 81 ceinturant sans contact la couronne dentée 52, prolongée d'un cône de centrage 82 adapté pour assurer le guidage externe et le centrage de la couronne dentée 53 de l'autre organe d'accouplement 51 lors de l'embrayage des dits organes d'accouplement.

Ce support mobile 70 est également équipé d'un cône de centrage interne 83 de forme conjuguée des tronçons d'extrémité 130, 131 de l'alésage 57 de l'organe d'accouplement 51. Ce cône de centrage interne 83 est constitué, d'un seul tenant :
- d'un tronçon antérieur cylindrique 84 adapté pour s'insérer partiellement à l'intérieur de la couronne dentée 52 et s'étendre partiellement dans le prolongement postérieur de la dite couronne dentée,
- d'un tronçon postérieur tronconique 85 adapté pour assurer le guidage interne et le centrage de la couronne dentée 53 de l'autre organe d'accouplement 51 lors de l'embrayage des dits organes d'accouplement, et pour former une portée cylindrique pour le tronçon d'extrémité cylindrique 131 de l'alésage 57 de l'organe d'accouplement 51.

En vue de réaliser les déplacements selon l'axe longitudinal (x) de l'organe d'accouplement 50 du bâti d'attelage 8 relativement à l'organe d'accouplement 51 du bâti attelé 9, le support mobile 70 est mobile en translation selon un axe longitudinal (x) relativement à un support dit fixe 86.

Ce support fixe 86 est composé, d'un seul tenant, d'un manchon cylindrique 87 délimitant un alésage longitudinal chemisé à l'intérieur duquel coulisse le manchon cylindrique 72 de l'élément antérieur 71, et d'un flasque frontal postérieur 88 percé d'un orifice circulaire dans le prolongement de l'alésage du dit manchon cylindrique 87.

Les moyens de déplacement de l'organe d'accouplement 50 selon l'axe longitudinal (x) comportent, quant à aux, un vérin 89 associé à un accumulateur hydraulique, dont le corps 89a est monté sur le flasque frontal 88 du support fixe 86, de façon à s'étendre, selon un axe longitudinal (x), dans le prolongement antérieur du dit flasque, et dont la tige 89b est solidaire du flasque frontal 73 de l'élément antérieur 71 du support mobile 70.

Ces moyens de déplacement comportent, en outre, deux tiges de guidage 90, 91 s'étendant selon des axes longitudinaux (x), liées au flasque frontal 73 de l'élément antérieur 71 du support mobile 70, et coulissantes longitudinalement relativement au support fixe 86.

De plus, le vérin 89 et les deux tiges de guidage 90, 91 sont disposés de façon que l'axe du dit vérin coïncide avec le sommet d'un triangle isocèle ou équilatéral dont les extrémités de la base coïncident avec les axes respectifs des deux tiges de guidage 90, 91.

En vue de conférer un degré de liberté en rotation autour de l'axe vertical (z) à l'organe d'accouplement 50, le flasque frontal 88 du support fixe 86 est monté libre en rotation autour d'un axe vertical (z) à l'intérieur d'une cage annulaire 94. A cet effet, deux pattes longitudinales postérieures, supérieure 92 et inférieure 93, s'étendant selon un axe longitudinal (x), sont, d'une part, solidarisées, au niveau d'une de leurs extrémités, sur ce flasque fixe 86, et d'autre part, montées pivotantes autour d'un axe vertical (z) par rapport à la cage annulaire 94, au niveau de leur autre extrémité.

De plus, afin de conférer un degré de liberté en rotation autour de l'axe transversal (y) à la cage annulaire 94, cette dernière est montée pivotante à l'intérieur d'un cadre 95 comportant deux montants tels que 96, une traverse supérieure 97 et une traverse inférieure 98.

En vue de son pivotement, la cage annulaire 94 est équipée de deux arbres externes transversaux 99, 100 s'étendant coaxialement de part et d'autre de la dite cage annulaire et montés rotatifs chacun dans le montant 96 en vis-à-vis du cadre 95.

De plus, un ressort tel que 101 est monté autour de chaque arbre 99, 100, de façon à s'étendre entre la cage annulaire 94 et le montant 96 du cadre 95, en vue de maintenir la dite cage annulaire dans une position sensiblement centrée entre les dits montants 96.

Enfin, en vue de conférer un degré de liberté en translation selon un axe vertical (z) au cadre 95, ce dernier est équipé de quatre roulettes rotatives autour d'axes transversaux (y), adaptées pour se déplacer dans les rails de guidage 25, 26 : deux roulettes supérieures telles que 102 disposées de part et d'd'autre de la traverse supérieure 97, et deux roulettes inférieures telles que 103 disposées de part et d'autre de la traverse inférieure 98.

En dernier lieu, concernant le bâti d'attelage 8, de dernier comporte des moyens de prépositionnement de la position du cadre 95 le long des rails de guidage 25, 26, agencés :
- dans l'état débrayé des organes d'accouplement 50, 51, pour maintenir le cadre 95 dans une position prédéfinie correspondant à une position prédéterminée de l'organe d'accouplement, 51 selon l'axe vertical (z),
- dans l'état embrayé des organes d'accouplement 50, 51, pour se déformer de façon élastique en vue d'autoriser, les déplacements des dits organes d'accouplement le long de l'axe vertical (z).

Ces moyens de prépositionnement sont intégrés dans les deux tubes verticaux 27 et comprennent, en premier lieu, un vérin à gaz 105 dont la tige 105a est attelée à un axe 104 reliant la dite tige à une extension antérieure 96a formée au niveau de l'extrémité supérieure des montants 96 du cadre 95, le dit axe s'étendant, à cet effet au travers de la lumière verticale 28 ménagée dans chaque tube 27.

Ces moyens de prépositionnement comprennent, en outre, logé dans chaque tube vertical 27, un étui cylindrique 106 de diamètre interne adapté pour loger le corps 105b du vérin 105, doté d'un tronçon supérieur 106b de diamètre externe supérieur à son diamètre externe courant, délimitant un épaulement radial externe.

Ces moyens de prépositionnement comprennent également un ressort hélicoïdal 107 disposé autour de l'étui cylindrique 106, et des cales telles que 108 de longueurs prédéterminées adaptées pour être insérées dans le tube cylindrique 27 de façon à s'étendre entre le fond de ce tube 27 et l'extrémité inférieure du ressort 107.

Selon ce principe, le prépositionnement du cadre 95 est donc simplement fonction de la longueur des cales 108.

Les moyens de montage de l'organe d'accouplement 51 sur le bâti attelé 9 sont similaires, dans leur principe, à ceux décrits ci-dessus avec une simplification résultant de l'absence de déplacement selon un axe longitudinal (x) de l'organe d'accouplement 51.

Ainsi, en premier lieu, l'organe d'accouplement 51 du bâti attelé 9 est monté libre en rotation autour de l'axe longitudinal (x) à l'intérieur d'un support fixe 110 composé de deux éléments solidarisés dans le prolongement l'un de l'autre :
- un premier élément postérieur 111 comportant un manchon cylindrique 112 délimitant un alésage longitudinal adapté pour loger l'arbre tubulaire 55, prolongé d'un flasque frontal antérieur 113 dans lequel est ménagé un lamage dans lequel débouche l'alésage du manchon cylindrique 112, logeant un roulement radial 132,
- un second élément antérieur 114 consistant en un flasque frontal adapté pour être solidarisé avec le flasque antérieur 113, dans la face d'assemblage duquel est ménagé un lamage logeant un roulement axial 133 du type butée à aiguilles de butée axiale de la couronne dentée 53, agencé pour présenter une portée d'appui axial contre la cage interne du roulement radial 132.

En vue de conférer un degré de liberté en rotation autour de l'axe vertical (z) à l'organe d'accouplement 51, le flasque frontal 113 est monté libre en rotation autour d'un axe vertical (z) à l'intérieur d'une cage annulaire 115.

De plus, afin de conférer un degré de liberté en rotation autour de l'axe transversal (y) à cette cage annulaire 115, cette dernière est montée pivotante à l'intérieur d'un cadre 118, et comporte, à cet effet, deux arbres externes transversaux tels que 116 autour de chacun desquels est disposé un ressort 117, s'étendant coaxialement de part et d'autre de la dite cage annulaire, et montés rotatifs chacun dans un montant 119 du cadre 118.

Enfin, en vue de conférer un degré de liberté en translation selon un axe vertical (z) au cadre 118, ce dernier est équipé de quatre roulettes rotatives autour d'axes transversaux (y), adaptées pour se déplacer dans les rails de guidage 46, 47 : deux roulettes supérieures telles que 120 et deux roulettes inférieures telles que 121.

En dernier lieu, ce bâti attelé 9 comporte des moyens de prépositionnement de la position du cadre 118 le long des rails de guidage 46, 47 identiques à ceux équipant le bâti d'attelage 8 et comprenant donc deux ensembles identiques, chacun logé dans un tube 48, et constitué :
- d'un vérin 122 logé dans un étui cylindrique 123 autour duquel est disposé un ressort hélicoïdal 124,
- d'un jeu de cales 125 de longueurs différentes.

La procédure d'attelage au moyen de ce dispositif d'attelage est décrite ci-dessous.

En préalable, après montage du bâti d'attelage 8 sur un tracteur agricole 1 et montage d'un bâti attelé 9 sur un ou plusieurs outils agricoles, une étape initiale consiste à régler, au moyen des cales 108, la position initiale, selon un axe vertical (z), de l'organe d'accouplement 50 monté sur le bâti d'attelage 8, puis à ajuster, au moyen des cales 125, la position, selon un axe vertical (z), de l'organe d'accouplement 51 de chaque bâti attelé 9 de façon qu'elle coïncide avec celle de l'organe d'accouplement 50 lors de l'appairage des deux bâtis 8, 9.

Une fois ces réglages initiaux réalisés, chaque attelage consiste à prépositionner le tracteur agricole 1 puis à entraîner le relevage du bâti d'attelage 8, jusqu'à obtenir un contact partiel des faces de contact respectives 22a, 43a des semelles 22, 43, position dans laquelle les pions de centrage 23, 24 sont partiellement engagés dans les orifices 45 en vis-à-vis.

L'étape suivante consiste à déployer le vérin central 7 du système de relevage 5 de façon à engendrer un basculement du bâti d'attelage 8, lors duquel les pions de centrage 23, 24 constituent les pivots du dit basculement, jusqu'à amener les faces frontales 8a, 9a des deux bâtis 8, 9 au contact l'une de l'autre, position dans laquelle les faces en regard 22a, 43a des semelles 22, 43 sont également au contact l'une de l'autre.

En outre, dans cette position finale appairée des deux bâtis 8, 9, la portion antérieure 38 de la plaque 35, formant une gâche, est insérée dans la chape 14, et le vérin logé dans la traverse 15 peut donc être activé de façon à assurer le verrouillage relatif des dits bâtis.

Une fois, cet appairage réalisé, en outre, les deux organes d'accouplement 50, 51 sont sensiblement à la même hauteur en raison du réglage initial de leur position selon un axe vertical (z).

Leur accouplement est donc obtenu par activation du vérin 89, et facilité, en premier lieu, par les deux cônes de centrage externe 82 et interne 83, puis par la forme chanfreinée des arêtes radiales de dents 64-66.

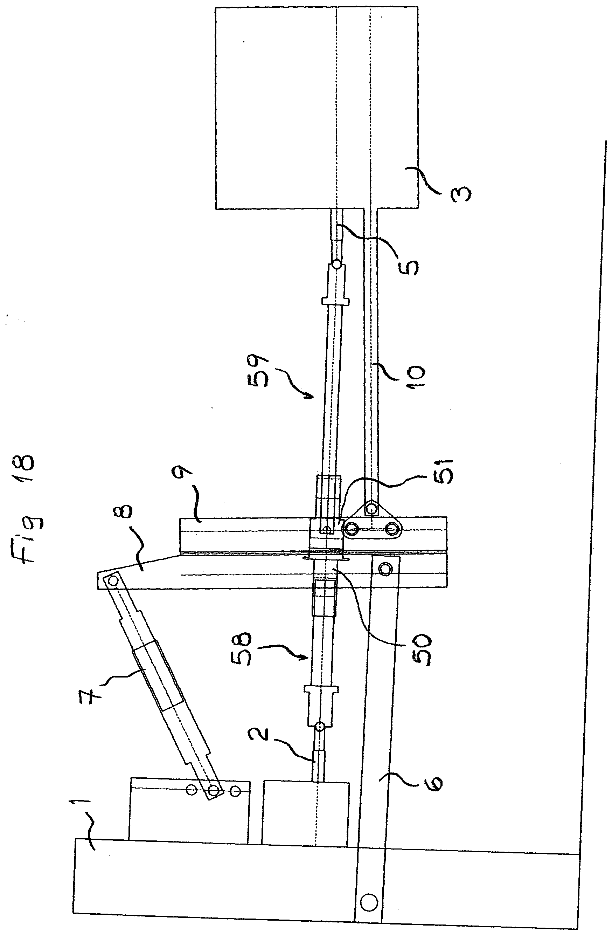

Une fois l'attelage et l'accouplement réalisés, tel que représenté aux figures 18 à 20, le degré de liberté en translation selon un axe vertical (z) et le degré de liberté en rotation autour d'un axe transversal (y), conférés aux organes d'accouplement 50, 51 par rapport aux bâtis 8, 9 appairés, permettent de maintenir les arbres de transmission 58, 59 coaxiaux quelle que soit l'inclinaison de l'outil 3 par rapport au tracteur 1, et par conséquent, de conférer à l'ensemble organes d'accouplement 50, 51/ arbres de transmission 58, 59 la même cinématique de mouvement que celle d'un dispositif d'attelage conçu pour l'attelage direct d'un outil agricole 3 sur le système de relevage trois points 5 d'un tracteur agricole 1.

Ainsi, notamment, la transmission de puissance est optimale quelle que soit la position relative et notamment l'inclinaison de l'outil 3 par rapport au tracteur 1.

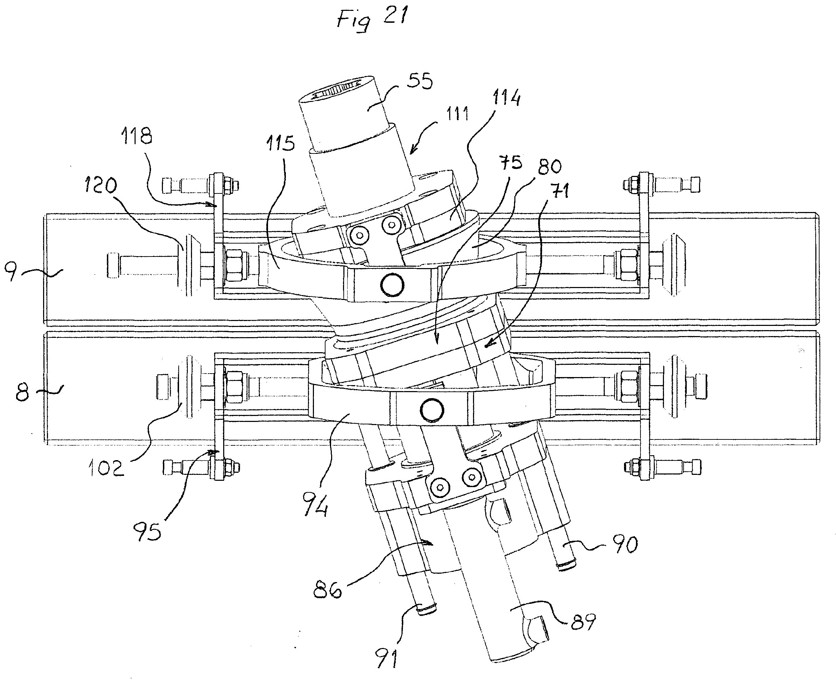

De plus, tel qu'illustré notamment à la figure 21, le degré de liberté en translation selon un axe transversal (y) et le degré de liberté en rotation autour d'un axe vertical (z) offrent des libertés de mouvement des moyens de transmission relativement aux bâtis 8, 9, conduisant à éviter de soumettre les dits moyens de transmission à des sollicitations résultant des débattements latéraux et du ballant auxquels sont sujets, de façon usuelle, les systèmes d'attelage trois points des tracteurs agricoles.

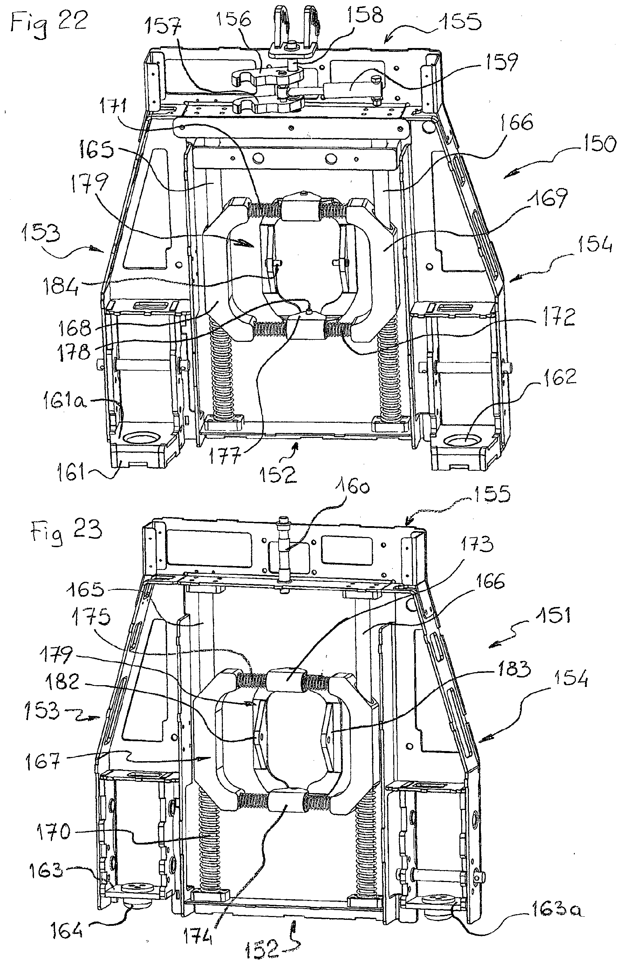

Les figures 22 à 27 représentent une deuxième variante de dispositif d'attelage selon l'invention dont seuls les éléments différents de ceux de la première variante de réalisation sont décrits en détail ci-dessous.

Comme le précédent, ce dispositif d'attelage se compose d'un bâti d'attelage 150 adapté pour être monté sur le système de relevage 2 d'un tracteur agricole 1, et d'un bâti attelé 151 adapté pour être monté sur un outil agricole 3.

En premier lieu, tel que représenté à la figure 22, le bâti d'attelage 150 et le bâti attelé 151 de ce dispositif d'attelage présentent une forme générale trapézoïdale similaire de celle des deux bâtis 8, 9 ci-dessus décrits, et consistent en des structures mécano-soudées composées d'une traverse inférieure 152 s'étendant entre les extrémités inférieures de deux montants 153, 154 entre les extrémités supérieures desquels s'étend une traverse supérieure 155.

Les moyens de verrouillage de ces deux bâtis 150, 151 consistent :
- pour le bâti d'attelage 150, en deux crochets de verrouillage superposées 156, 157 montés rotatifs dans des plans parallèles (x, z) autour d'un axe vertical 158 positionné axialement dans la traverse supérieure 155, dont la rotation est entrainée par un vérin 159 logé dans la dite traverse supérieure,
- pour le bâti attelé 151, en un axe vertical 160 positionné axialement dans la traverse supérieure 155.

De plus, en vue de l'appairage des deux bâtis 150, 151, le bâti d'attelage 150 comporte deux semelles telles que 161 dotées de faces supérieures planes de contact 161a et percées chacune d'un orifice circulaire 162, les dites semelles étant positionnées chacune entre les extrémités inférieures d'un des montants 153, 154, de façon à s'étendre dans le prolongement de la traverse inférieure 152.

Le bâti attelé 151 comporte également deux semelles telles que 163 dotées de faces inférieures planes de contact 163a, positionnées chacune entre les extrémités inférieures d'un des montants 153, 154, de façon à s'étendre dans le prolongement de la traverse inférieure 152.

Chacune de ces semelles 163 comporte, en outre, un pion de centrage 164 s'étendant en saillie sous la face plane de contact 163a de la dite semelle, et comportant, chacun une base cylindrique de diamètre conjugué de celui de l'orifice circulaire 162 ménagé dans les semelles 161 du bâti d'attelage 150, prolongée d'un tronçon hémisphérique.

Par ailleurs, chacun des deux bâtis 150, 151 comporte deux colonnes verticales 165, 166 positionnées chacune à proximité d'un montant 153, 154 et s'étendant entre la traverse inférieure 152 et la traverse supérieure 155.

Ces deux bâtis sont, en outre équipés, chacun d'un cadre 167 monté coulissant le long des deux colonnes 165, 166, c'est-à-dire mobile selon un axe vertical (z), le dit cadre étant constitué de :
- deux montants 168, 169 montés coulissants chacun le long d'une colonne 165, 166 et intégrant à cet effet des douilles à billes,
- deux traverses, supérieure 171 et inférieure 172, s'étendant respectivement entre les extrémités supérieures et inférieures des deux montants 168, 169.

Chacun de ces cadres 167 comporte, en outre, monté coulissant le long de chaque traverse 171, 172, c'est à dire mobile selon un axe transversal (y), un manchon 173, 174 intégrant une douille à billes, maintenu en position centrale de la dite traverse au moyen de deux ressorts 175, 176 disposés de part et d'autre du dit manchon et s'étendant entre ce dernier et le montant 168;169 correspondant.

De plus, chacun des manchons 173, 174 est prolongé latéralement d'une chape 177 logeant un axe vertical 178.

Chacun des bâtis 150, 151 comporte, en outre, des moyens de prépositionnement de la position des cadres 167 le long des colonnes 165, 166.

Ces moyens de prépositionnement comprennent des ressorts hélicoïdaux 170 disposés chacun autour d'une des colonnes 165, 166, et des cales (non représentées) de hauteurs prédéterminées, constituées par exemple de brides adaptées pour être positionnées autour des colonnes 165, 166, entre la traverse inférieure 152 et l'extrémité inférieure des ressorts hélicoïdaux 170.

Selon ce principe, le prépositionnement des cadres167 est donc simplement fonction de la hauteur des cales.

Chacun des bâtis 150, 151 comporte également une cage annulaire 179 de forme sensiblement rectangulaire, par rapport à laquelle s'étendent :
- deux flasques parallèles, supérieur 180 et inférieur 181, s'étendant dans des plans (x, y), adaptés pour venir se loger chacun dans la chape 177 d'un des manchons 173, 174, de façon conférer un degré de liberté en rotation de la cage annulaire 179 autour d'un axe vertical (z),
- deux flasques latéraux parallèles 182, 183 s'étendant dans des plans (x, z), dotés en regard de pivots tel que 184 définissant un axe de rotation s'étendant selon un axe transversal (y).

Les organes d'accouplement 50, 51 de ce dispositif d'attelage consistent en des organes d'accouplement par crabotage identiques à ceux décrits ci-dessus, et comportent donc, chacun une couronne dentée 52, 53 dotée d'une face frontale 52a, 53a dans laquelle sont ménagées des dents d'accouplement séparées par des crans, chacune des dites couronnes formant un tronçon d'extrémité de plus grand diamètre d'un arbre tubulaire 54 55, séparé de ce dernier par un épaulement radial 54a, 55a.

Chacun de ces organes d'accouplement 50, 51 est, en outre, percé d'un alésage cannelé 56, 57 présentant par exemple une section en forme d'étoile.

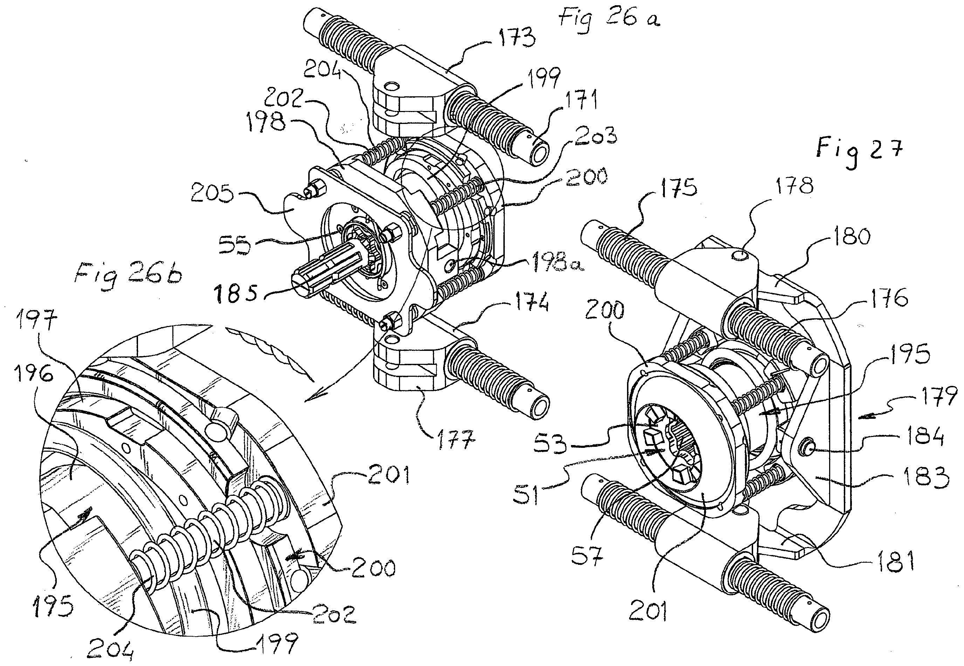

Il est à noter que, tel que représenté à la figure 26a, l'organe d'accouplement 51 monté sur le bâti attelé 151 peut être équipé d'un manchon 185 d'adaptation pour cardan de grandeur longueur, composé de deux tronçons d'arbre cannelé coaxiaux de diamètres différents, dont un tronçon cannelé adapté pour se loger dans l'alésage cannelé 57 de l'organe d'accouplement 51.

Tel que précédemment, ces organes d'accouplement 50, 51 sont montés sur les bâtis 150, 151 :
- libres en rotation autour d'un axe longitudinal (x) en vue de l'entraînement en rotation de l'arbre récepteur 4 de l'outil agricole 3,
- mobiles en translation selon l'axe longitudinal (x) relativement l'un par rapport à l'autre entre une position débrayée et une position embrayée,
- mobiles en translation selon un axe vertical (z) et un axe transversal (y),
- et libres en rotation autour d'un axe transversal (y) et autour d'un axe vertical (z).

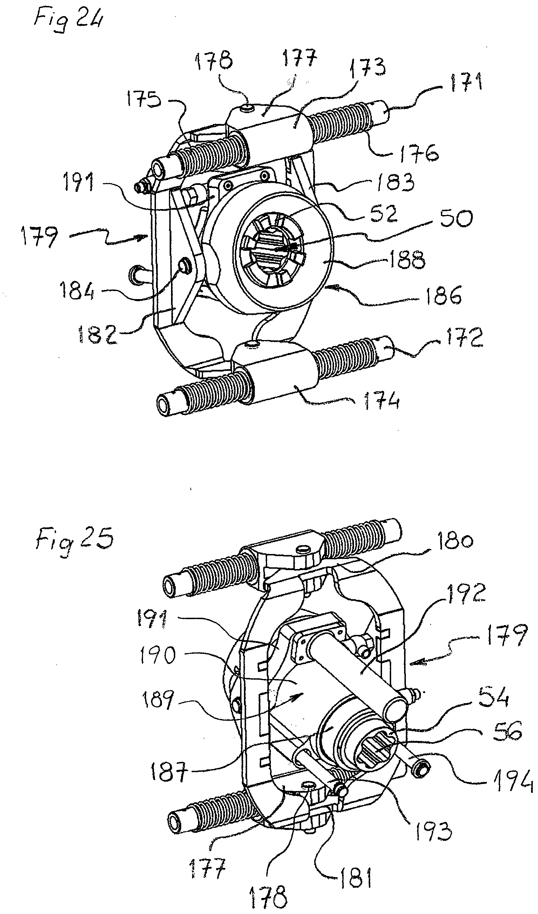

A cet effet, tel que représenté aux figures 24, 25, l'organe d'accouplement 50 du bâti d'attelage 150 est, en premier lieu, monté libre en rotation autour de l'axe longitudinal (x) à l'intérieur d'un support mobile 186, composé de deux éléments solidarisés dans le prolongement l'un de l'autre :
- un premier élément antérieur comportant un manchon cylindrique 187 délimitant un alésage longitudinal adapté pour loger l'arbre tubulaire 54, prolongé d'un flasque frontal (non vu sur les figures),
- un second élément postérieur comportant, un cône de centrage femelle 188 dont la base ceinture la base de la couronne dentée 52.

En vue de réaliser les déplacements selon l'axe longitudinal (x) de cet organe d'accouplement 50, le support mobile 186 est mobile en translation selon un axe longitudinal (x) relativement à un support dit fixe 189 composé, d'un seul tenant :
- d'un manchon cylindrique 190 délimitant un alésage longitudinal chemisé à l'intérieur duquel coulisse le manchon cylindrique 187 du support mobile 186,
- d'un flasque annulaire frontal postérieur 191 délimitant un orifice circulaire dans le prolongement de l'alésage du manchon cylindrique 187.

Les moyens de déplacement de l'organe d'accouplement 50 selon l'axe longitudinal (x) comportent, quant à aux, un vérin 192 dont le corps est monté sur le flasque annulaire 191 du support fixe 189, de façon à s'étendre, selon un axe longitudinal (x), dans le prolongement antérieur du dit flasque, et dont la tige est solidaire du flasque frontal du support mobile 186.

Ces moyens de déplacement comportent, en outre, deux tiges de guidage 193, 194 s'étendant selon des axes longitudinaux (x), liées au flasque frontal du support mobile 186, et coulissantes longitudinalement relativement au support fixe 189.

Par ailleurs, tel que représenté aux figures 24,et 25, le flasque annulaire 191 est monté pivotant par rapport à la cage annulaire 179 par l'intermédiaire des pivots 184, de sorte que l'organe d'accouplement 50 bénéficie :
- d'un degré de liberté en rotation autour d'un axe transversal (y),
- du degré de liberté en rotation autour de l'axe vertical (z) conféré à la cage annulaire 179,
- et des degrés de liberté en translation selon un axe transversal (y) et un axe vertical (z) conféré à la cage annulaire 179.

Tel que représenté aux figures 26a, 26b et 27, l'organe d'accouplement 51 du bâti d'attelage 151 est, en premier lieu, également monté libre en rotation autour de l'axe longitudinal (x) à l'intérieur d'un support mobile 195 comportant un manchon cylindrique 196 délimitant un alésage longitudinal adapté pour loger l'arbre tubulaire 55, prolongé d'un flasque frontal antérieur 197 d'appui frontal de la couronne dentée 53.

Ce support mobile 195 est, en outre, monté coulissant à l'intérieur d'une pièce annulaire de guidage 198 fixe en translation percée, en outre, latéralement, de deux orifices externes diamétralement opposés 198a destinés au montage de cette pièce de guidage 198 dans la cage annulaire 179, et adaptés, à cet effet pour loger les pivots 184 de la dite cage annulaire.

De plus, cette pièce annulaire de guidage 198 et le manchon cylindrique 196 sont dotés d'éléments de butée longitudinale, non vus sur les figures, déterminant la position maximale d'éloignement du flasque frontal antérieur 197 et donc de la couronne dentée 53, par rapport à la dite pièce de guidage, position vers laquelle le support mobile 195 est sollicité au moyen d'un ressort 199 disposé autour du manchon cylindrique 196, en butée entre les dits flasque frontal 197 et pièce de guidage198.

L'organe d'accouplement 51 bénéficie donc d'un degré de liberté en rotation autour d'un axe transversal (y), et des trois degrés de liberté en rotation et en translation conférés à la cage annulaire 179.

De plus lors de l'accouplement des organes d'accouplement 50, 51 obtenu par déploiement du vérin 192 du bâti d'attelage 150, le ressort 199 se trouve comprimé et assure donc un rôle d'amortisseur permettant d'absorber les fluctuations de longueur des orages de transmission.

Tel que représenté aux figures 26a, 26b et 27 le bâti attelé 151 est, en outre, équipé de moyens de maintien de l'organe d'accouplement 51 dans une position stable au moins sensiblement axée par rapport à l'axe longitudinal (x), dans la position débrayée du dit organe d'accouplement.

Ces moyens de maintien comprennent un ensemble mobile selon l'axe longitudinal (x) relativement au support mobile 195 et à la pièce annulaire de guidage198, comportant, disposées de part et d'autre de la cage annulaire 179 et reliées par des entretoises longitudinales telles que 202, 203 :
- une pièce frontale escamotable 200, 201 agencée pour être repoussée par le cône de centrage femelle 188 associé à l'organe d'accouplement 50 du bâti d'attelage 150, lors du déploiement du vérin 192,
- une plaque de butée 205 agencée de façon à être accolée en butée contre la cage annulaire 179 et à interdire le pivotement de l'ensemble mobile et du support mobile 195 relativement à la dite cage annulaire, dans la position débrayée des organes d'accouplement 50, 51, et pour se trouver écartée de la cage annulaire 179 d'une distance autorisant les pivotements du support mobile 195 dans la position embrayée des dits organes d'accouplement,
- des ressorts 204 disposés autour des entretoises 202, 203, en butée entre la pièce de guidage annulaire 198 et la pièce frontale escamotable 200, 201, de façon solliciter l'ensemble mobile vers sa position de stabilisation de l'organe d'accouplement 51, et pour autoriser le déplacement du dit ensemble mobile lors du déplacement de l'organe d'accouplement 50 monté sur le bâti d'attelage 150 vers la position embrayée des organes d'accouplement 50, 51.

De plus, la pièce frontale escamotable se compose d'un cône de centrage mâle 201 conjugué du cône de centrage femelle 188, accolé longitudinalement à une platine annulaire 200 adaptée pour venir en butée contre le flasque frontal 197 du support mobile 195 dans la position embrayée des organes d'accouplement 50, 51, de façon à annihiler l'action des ressorts 204, et à permettre au ressort 199 de jouer son rôle d'amortisseur.

En dernier lieu, la pièce escamotable 200, 201 est équipée de poussoirs à billes (non vus aux figures) montés à l'intérieur de la platine annulaire 200, de façon à déboucher radialement dans l'alésage de cette dernière.

De tels poussoirs à billes sont conçus, au contact du flasque frontal 197 et avant de s'escamoter, pour s'opposer momentanément au déplacement de l'organe d'accouplement 50 durant un laps de temps adapté pour garantir un emboîtement effectif du cône de centrage mâle 201 à l'intérieur du cône de centrage femelle 188.

Le dispositif d'attelage selon l'invention est donc adapté :
- pour permettre à un opérateur d'habileté moyenne de réaliser, sans quitter son poste de conduite, toutes les opérations d'attelage d'un outil agricole au système de relevage d'un tracteur agricole : attelage proprement dit de l'outil agricole, et accouplement des arbres de transmission,
- pour conférer aux moyens de transmission la même cinématique de mouvement que celle d'un dispositif d'attelage conçu pour l'attelage direct d'un outil agricole 3 sur le système de relevage trois points 5 d'un tracteur agricole 1, et notamment pour garantir ainsi une transmission de puissance optimale quelle que soit la position relative et notamment l'inclinaison de l'outil 3 par rapport au tracteur 1.

## Revendications

1. Dispositif d'attelage d'un outil (3), tel qu'un outil agricole sur un système de relevage (5) d'un engin (1), tel qu'un tracteur agricole, équipé d'une prise de force (2), comprenant :
- deux bâtis consistant en un bâti (8 ; 150), dit d'attelage, doté d'organes de fixation (16, 21) au système de relevage (5) de l'engin (1), et en un bâti (9 ; 151), dit attelé, doté d'organes de fixation (36, 37, 41, 42) à l'outil (3), adaptés pour s'étendre transversalement par rapport respectivement à l'engin (1) et à l'outil (3), les dits bâti d'attelage et bâti attelé délimitant des faces de jonction (8a, 9a) adaptées pour permettre de les appairer et comportant des moyens (14, 38 ; 156-160) de verrouillage relatif dans la dite position appairée,
- des moyens de transmission comportant :
• des organes d'accouplement (50, 51) complémentaires montés respectivement sur le bâti d'attelage (8 ; 150) et sur le bâti attelé (9 ; 151) par l'intermédiaire de moyens de déplacement relatif (89 ; 192, 199) des dits organes d'accouplement selon un axe dit longitudinal (x) perpendiculaire aux faces de jonction (8a, 9a), adaptés pour les déplacer entre une position débrayée et une position embrayée, dans la position appairée des deux bâtis (8, 9 ; 150, 151),
• des organes de transmission (58, 59, 62, 63) de liaison des organes d'accouplement (50, 51) respectivement à la prise de force (2) de l'engin (1) et à l'arbre récepteur (4) de l'outil (3),
le dit dispositif d'attelage étant **caractérisé en ce que** :
- les deux organes d'accouplement (50, 51) sont montés respectivement sur le bâti d'attelage (8 ; 150) et sur le bâti attelé (9 ; 151) de façon à être :
• mobiles en translation selon un axe dit vertical (z) s'étendant selon une direction au moins sensiblement verticale dans une position du bâti (8, 9 ; 150, 151) dans laquelle la face de jonction (8a, 9a) de ce dernier s'étend dans un plan au moins sensiblement vertical,
• libres en rotation autour d'un axe dit transversal (y) formant un repère orthogonal avec l'axe longitudinal (x) et l'axe vertical (z),
- des moyens de prépositionnement (104-108, 122-125 ; 170) de chaque organe d'accouplement (50, 51) selon un axe vertical (z), sont adaptés pour :
• maintenir, dans la position débrayée des deux organes d'accouplement (50, 51), chacun des dits organes d'accouplement dans une position prédéterminée selon l'axe vertical (z), apte à permettre leur embrayage dans la position appairée des deux bâtis (8, 9 ; 150, 151),
• permettre, dans la position embrayée des organes d'accouplement (50, 51), des débattements des dits organes d'accouplement accouplés selon l'axe vertical (z), et des inclinaisons de ces derniers autour de l'axe transversal (y),
- les organes de transmission comprennent, associé à chaque organe d'accouplement (50, 51), un arbre de transmission (58, 59) de longueur librement variable, d'une part, doté d'un organe d'articulation (62, 63) pour sa jonction respectivement avec la prise de force (2) de l'engin (1) et l'arbre récepteur (4) de l'outil (3), et, d'autre part, solidarisé à l'organe d'accouplement (50, 51) associé.

2. Dispositif d'attelage selon la revendication 1 **caractérisé en ce que** les moyens de prépositionnement comportent, des moyens élastiques (105, 107, 122 , 124 ; 170) montés sur chaque bâti (8, 9 ; 150, 151) et agencés pour maintenir chaque organe d'accouplement (50, 51) dans une position prédéterminée selon l'axe vertical (z), de prépositionnement du dit organe d'accouplement, et pour se déformer de façon élastique en vue d'autoriser, dans leur position embrayée, les déplacements des organes d'accouplement (50, 51) le long de l'axe vertical (z).

3. Dispositif d'attelage selon la revendication 2 **caractérisé en ce qu'**il comprend des moyens de calage (108, 125) interchangeables adaptés pour être interposés, selon l'axe vertical (z), entre chaque bâti (8, 9) et les moyens élastiques (105, 107, 122, 124; 170) de prépositionnement de chaque organe d'accouplement (50, 51), en vue d'un ajustement de la hauteur initiale de prépositionnement du dit organe d'accouplement.

4. Dispositif d'attelage selon l'une des revendications précédentes **caractérisé en ce que** chaque organe d'accouplement (50, 51) est monté rotatif dans un bloc-support (70, 86, 110 ; 186, 189, 195, 198), au moins un des dits blocs supports (70, 86 ; 186, 189, 195, 198) étant scindé en un support (86 ; 189, 198) fixe en translation selon l'axe longitudinal (x) et en un support (70 ; 186, 195) mobile en translation selon l'axe longitudinal (x), dans lequel est monté rotatif l'organe d'accouplement (50, 51) associé, les moyens de déplacement relatif des organes d'accouplement (50, 51) consistant en des moyens (89; 192, 199) de déplacement en translation de chacun des dits supports mobiles.

5. Dispositif d'attelage selon la revendication 4 **caractérisé en ce que** les deux blocs supports (186, 189, 195, 198) sont scindés en un support (189, 198) fixe en translation selon l'axe longitudinal (x) et en un support (186, 195) mobile en translation selon l'axe longitudinal (x), les moyens de déplacement relatif des organes d'accouplement (50, 51) comprenant :
- un actionneur fluidique (192) de déplacement du support mobile (186) du bloc support de l'organe d'accouplement (50) monté sur le bâti d'attelage (150),
- des moyens élastiques (199) positionnés entre le support fixe (198) et le support mobile (195) du bloc support de l'organe d'accouplement (51) monté sur le bâti attelé (151).

6. Dispositif d'attelage selon la revendication 4 **caractérisé en ce que** seul le bloc support (70, 86) de l'organe d'accouplement monté sur le bâti d'attelage est scindé en un support (86) fixe en translation selon l'axe longitudinal (x) et en un support (70) mobile en translation selon l'axe longitudinal (x), les moyens de déplacement relatif des organes d'accouplement (50, 51) comprenant un actionneur fluidique (89) associé à un accumulateur fluidique.

7. Dispositif d'attelage selon l'une des revendications précédentes **caractérisé en ce que** chaque organe d'accouplement (50, 51) est monté libre en rotation autour d'un axe vertical (z) par rapport au bâti (8, 9 ; 150, 151) correspondant.

8. Dispositif d'attelage selon l'une des revendications 4 à 6 et la revendication 7 prises ensemble **caractérisé en ce que** chaque bloc support (70, 86, 110 ; 186, 189, 195, 198) est monté libre en rotation autour d'un des deux axes suivants, axe vertical (z) ou axe transversal (y), à l'intérieur d'une cage annulaire (94, 115 ; 179) mobile en translation selon un axe vertical (z) et libre en rotation autour du second des deux axes, axe transversal (y) ou axe vertical (z), par rapport au bâti (8, 9 ; 150, 151) correspondant.

9. Dispositif d'attelage selon l'une des revendications précédentes **caractérisé en ce que** chaque organe d'accouplement (50, 51) est monté libre en translation selon un axe transversal (y) par rapport au bâti (8, 9 ; 150, 151) correspondant, le dit bâti comportant des moyens élastiques (101, 117 ; 175, 176) disposés de part et d'autre du dit organe d'accouplement, selon l'axe transversal (y), de façon à le maintenir dans une position sensiblement centrée par rapport au bâti (8, 9; 150, 151) en l'absence de sollicitation transversale.

10. Dispositif d'attelage selon la revendication 8 et la revendication 9 prises ensemble **caractérisé en ce que** :
- chaque bloc support (186, 189, 195, 198) est monté libre en rotation autour d'un axe transversal (y) à l'intérieur de la cage annulaire (179),
- chaque cage annulaire (179) est montée libre en rotation autour d'un axe vertical (z) relativement à deux pivots (177, 178) :
• libres en translation chacun le long d'une traverse (171) d'un cadre (167) doté de montants (168, 169) montés coulissants le long de colonnes (165, 166) s'étendant selon des axes verticaux (z), solidaires du bâti (150, 151) correspondant,
• maintenus dans une position centrée entre les deux montants (168, 169) au moyen de ressorts (175, 176) disposés autour des traverses (171) de part et d'autre des dits pivots.

11. Dispositif d'attelage selon la revendication 10 **caractérisé en ce qu'**il comprend des moyens de maintien du bloc-support (195, 198) de l'organe d'accouplement (51) monté sur le bâti attelé (151) dans une position stable au moins sensiblement axée par rapport à l'axe longitudinal (x), dans la position débrayée du dit organe d'accouplement, les dits moyens de maintien comprenant :
- un ensemble mobile selon l'axe longitudinal (x) relativement au bloc-support (195, 198), lié en rotation au dit bloc-support, et comportant, disposées de part et d'autre de la cage annulaire (179) et reliées par des organes de liaison longitudinaux (202, 203),
• une pièce frontale escamotable (201) agencée pour être repoussée par l'organe d'accouplement (50) monté sur le bâti d'attelage (150), lors du déplacement de ce dernier vers la position embrayée des organes d'accouplement (50, 51),
• une plaque de butée (205) agencée de façon à être accolée en butée contre la cage annulaire (179) et à interdire le pivotement de l'ensemble mobile et du bloc-support (195, 198) relativement à la dite cage annulaire, dans la position débrayée des organes d'accouplement (50, 51), et pour se trouver écartée de la cage annulaire (179) d'une distance autorisant les pivotements du bloc-support (195, 198), dans la position embrayée des dits organes d'accouplement,
- des moyens élastiques (204) disposés de façon à solliciter l'ensemble mobile (201-203, 205) vers sa position de stabilisation en rotation du bloc-support (195, 198) par rapport à la cage annulaire (179), et pour autoriser le déplacement du dit ensemble mobile lors du déplacement de l'organe d'accouplement (50) monté sur le bâti d'attelage (150) vers la position embrayée des organes d'accouplement (50, 51).

12. Dispositif d'attelage selon la revendication 11 **caractérisé en ce que** la pièce frontale escamotable (201) est agencée de façon à être maintenue, par les moyens élastiques (204) de l'ensemble mobile (201-203, 205), dans une position écartée du support mobile (195) du bloc support (195, 198) de l'organe d'accouplement (51) monté sur le bâti attelé (151), et pour être repoussée jusqu'à une position de butée contre le dit support mobile.

13. Dispositif d'attelage selon la revendication 8 et la revendication 9 prises ensemble **caractérisé en ce que** :
- chaque bloc support (70, 86, 110) est monté libre en rotation autour d'un axe vertical (z) à l'intérieur de la cage annulaire (94, 115),
- chaque cage annulaire (94, 115) comporte deux arbres supports coaxiaux (99, 100, 116) montés libres en rotation autour d'un axe transversal (y) par rapport au bâti (8, 9) correspondant, s'étendant latéralement selon un même axe transversal (y) de part et d'autre de la dite cage annulaire, et autour de chacun desquels est disposé un ressort (101, 117) de rappel de la cage annulaire (94, 115) vers sa position sensiblement centrée par rapport au bâti (8, 9).

14. Dispositif d'attelage selon la revendication 13 **caractérisé en ce que** chaque cage annulaire (94, 115) est disposée dans un cadre (95, 118) doté de montants (96, 119) dans chacun desquels est monté rotatif un arbre (99, 100, 116) support de la dite cage annulaire, les dits montants étant montés coulissants le long de rails (25, 26, 47) s'étendant selon des axes verticaux (z), solidaires du bâti (8, 9) correspondant.

15. Dispositif d'attelage selon l'une des revendications précédentes **caractérisé en ce que** les organes d'accouplement (50,51) consistent en des organes d'accouplement par crabotage dotés de détrompeurs.

16. Dispositif d'attelage selon la revendication 15 **caractérisé en ce que** les organes d'accouplement (50, 51) présentent la forme de couronnes dentées (52, 53) dotées d'une face frontale (52a, 53a) dans laquelle sont ménagées des dents d'accouplement (64-66).

17. Dispositif d'attelage selon l'une des revendications 11 ou 12 et la revendication 16 prises ensemble **caractérisé en ce que** :
- la pièce frontale escamotable consiste en un cône de centrage (201) mâle ou femelle doté d'une base adaptée pour ceinturer la couronne dentée (53) de l'organe d'accouplement (51) monté sur le bâti attelé (151),
- l'organe d'accouplement (50) monté sur le bâti d'attelage (150) comporte un cône de centrage complémentaire (188), femelle ou mâle, doté d'une base ceinturant la couronne dentée (52) du dit organe d'accouplement, adapté pour coopérer et repousser le cône de centrage (201) du bâti attelé (151).

18. Dispositif d'attelage selon la revendication 16 **caractérisé en ce qu'**il comporte un cône de centrage (82), dit externe, doté d'une base (81) ceinturant la couronne dentée (52) constitutive d'un des organes d'accouplement (50), adapté pour assurer le guidage externe et le centrage de l'autre organe d'accouplement (51) lors de l'embrayage des dits organes d'accouplement.

19. Dispositif d'attelage selon l'une des revendications 16 ou 18 **caractérisé en ce que** :
- une des couronnes dentées (52) constitutive d'un organe d'accouplement (50) présente une zone centrale dans le prolongement axial de laquelle s'étend un cône de centrage (83), dit interne,
- la seconde couronne dentée (53) présente une zone centrale évidée (130, 131) délimitant un alésage longitudinal de forme conique conjuguée de celle du cône de centrage interne (83), adaptée pour assurer le guidage et le centrage.

20. Dispositif d'attelage selon la revendication 19 **caractérisé en ce que** le cône de centrage interne (83) comporte une base cylindrique (84) dans le prolongement de la couronne dentée (52) associée, adaptée pour former une portée cylindrique pour un tronçon d'extrémité cylindrique (131) de l'alésage (130, 131) délimité par l'autre couronne dentée (53).

21. Dispositif d'attelage selon l'une des revendications précédentes **caractérisé en ce que** chaque arbre de transmission (58, 59) consiste en un arbre télescopique composé de deux éléments télescopiques consistant en :
- un élément (60, 61), dit élément mâle, équipé d'un organe d'articulation (62, 63) pour la jonction avec respectivement la prise de force (2) de l'engin (1) et l'arbre récepteur (4) de l'outil (3),
- un élément (50, 51), dit élément femelle, formant, en outre, l'organe d'accouplement.

22. Dispositif d'attelage selon les revendications 16 et 21 prises ensemble **caractérisé en ce que** :
- chaque élément télescopique mâle consiste en un arbre cannelé (60, 61),
- chaque élément télescopique femelle consiste en une douille cannelée (50, 51) d'un seul tenant avec la couronne dentée (52, 53) formant l'organe d'accouplement associé.

## Patentansprüche

1. Kopplungsvorrichtung eines Werkzeugs (3), etwa zur Kopplung eines landwirtschaftlichen Werkzeugs mit einem Hebesystem (5) einer Maschine (1), etwa eines landwirtschaftlichen Schleppers, die mit einer Zapfwelle (2) ausgestattet ist, umfassend:
- zwei Träger, bestehend aus einem sogenannten Kopplungsträger (8; 150), der mit Befestigungselementen (16, 21) zur Befestigung am Hebesystem (5) der Maschine (1) versehen ist, und einem sogenannten gekoppelten Träger (9; 151), der mit Befestigungselementen (36, 37, 41, 42) zur Befestigung am Werkzeug (3) versehen ist, die dazu ausgelegt sind, sich jeweils quer zur Maschine (1) bzw. zum Werkzeug (3) zu erstrecken, wobei der Kopplungsträger und der gekoppelte Träger Anschlussflächen (8a, 9a) begrenzen, die dazu ausgelegt sind, zu ermöglichen, sie zu paaren, und die Mittel (14, 38; 156-160) zur relativen Arretierung in der gepaarten Position umfassen,
- Übertragungsmittel, umfassend:
• komplementäre Kupplungselemente (50, 51), die anhand von Mitteln zur relativen Verlagerung (89; 192, 199) der Kupplungselemente entlang einer sogenannten Längsachse (x), die senkrecht zu den Anschlussflächen (8a, 9a) verläuft, auf dem Kopplungsträger (8; 150) bzw. dem gekoppelten Träger (9; 151) montiert sind, die dazu ausgelegt sind, sie in der gepaarten Position der zwei Träger (8, 9; 150, 151) zwischen einer ausgekoppelten Position und einer eingekoppelten Position zu verlagern,
• Übertragungselemente (58, 59, 62, 63) zur Verbindung der Kupplungselemente (50, 51) jeweils mit der Zapfwelle (2) der Maschine (1) und der Abtriebswelle (4) des Werkzeugs (3),
wobei die Kopplungsvorrichtung **dadurch gekennzeichnet ist, dass**:
- die zwei Kupplungselemente (50, 51) jeweils auf dem Kopplungsträger (8; 150) und dem gekoppelten Träger (9; 151) montiert sind, sodass sie:
• entlang einer sogenannten vertikalen Achse (z), die sich entlang einer zumindest im Wesentlichen vertikalen Richtung erstreckt, in einer Position des Trägers (8, 9; 150, 151), in der die Anschlussfläche (8a, 9a) des Letzteren sich in einer zumindest im Wesentlichen vertikalen Ebene erstreckt, translatorisch beweglich sind,
• um eine sogenannte Querachse (y), die einen rechtwinkligen Bezugspunkt mit der Längsachse (x) und der vertikalen Achse (z) bildet, frei drehbar sind,
- Vorpositionierungsmittel (104-108, 122-125; 170) zur Vorpositionierung jedes Kupplungselements (50, 51) entlang einer vertikalen Achse (z) die dazu ausgelegt sind:
• in der ausgekoppelten Position der beiden Kupplungselemente (50, 51) jedes der Kupplungselemente in einer vorab festgelegten Position entlang der vertikalen Achse (z) zu halten, die geeignet ist, in der gepaarten Position der zwei Träger (8, 9; 150, 151) deren Einkopplung zu ermöglichen,
• in der eingekoppelten Position der Kupplungselemente (50, 51) Spiel der gekuppelten Kupplungselemente entlang der vertikalen Achse (z) und Neigungen Letzterer um die Querachse (y) zu ermöglichen,
- die Übertragungselemente, die eine jedem Kupplungselement (50, 51) zugeordnet sind, umfassen eine Antriebswelle (58, 59) frei variierbarer Länge, die zum einen Teil mit einem Gelenkelement (62, 63) zum Anschluss jeweils an die Zapfwelle (2) der Maschine (1) und an die Abtriebswelle (4) des Werkzeugs (3) versehen ist und zum anderen Teil mit einem zugeordneten Kupplungselement (50, 51) fest verbunden ist.

2. Kopplungsvorrichtung nach Anspruch 1, **dadurch gekennzeichnet, dass** die Vorpositionierungsmittel elastische Mittel (105, 107, 122, 124; 170) umfassen, die auf jedem Träger (8, 9; 150, 151) montiert sind und dazu eingerichtet sind, jedes Kupplungselement (50, 51) in einer vorab festgelegten Position entlang der vertikalen Achse (z) zu halten, zur Vorpositionierung des Kupplungselements und um sich elastisch zu verformen, um in ihrer eingekoppelten Position Verlagerungen der Kupplungselemente (50, 51) entlang der vertikalen Achse (z) zu erlauben.

3. Kopplungsvorrichtung nach Anspruch 2, **dadurch gekennzeichnet, dass** sie austauschbare Keilmittel (108, 125) umfasst, die dazu ausgelegt sind, im Hinblick auf eine Einstellung der Anfangshöhe der Vorpositionierung des Kupplungselements entlang der vertikalen Achse (z) zwischen jedem Träger (8, 9) und den elastischen Mitteln (105, 107, 122, 124; 170) zur Vorpositionierung jedes Kupplungselements (50, 51) eingefügt zu werden.

4. Kopplungsvorrichtung nach einem der vorherigen Ansprüche, **dadurch gekennzeichnet, dass** jedes Kupplungselement (50, 51) drehbar in einem Lagerblock (70, 86, 110; 186, 189, 195, 198) montiert ist, wobei zumindest einer der Lagerblöcke (70, 86; 186, 189, 195, 198) unterteilt ist in ein Lager (86; 189, 198), das gegenüber einer translatorischen Bewegung entlang der Längsachse (x) fest ist, und in ein Lager (70; 186, 195), das für eine translatorische Bewegung entlang der Längsachse (x) beweglich ist, in dem das zugeordnete Kupplungselement (50, 51) drehbar montiert ist, wobei die Mittel zu relativen Verlagerung der Kupplungselemente (50, 51) aus Mitteln (89; 192, 199) zur translatorischen Verlagerung jedes der beweglichen Lager bestehen.

5. Kopplungsvorrichtung nach Anspruch 4, **dadurch gekennzeichnet, dass** die zwei Lagerblöcke (186, 189, 195, 198) unterteilt sind in ein Lager (189, 198), das gegenüber einer translatorischen Bewegung entlang der Längsachse (x) fest ist, und in ein Lager (186, 195), das für eine translatorische Bewegung entlang der Längsachse (x) beweglich ist, wobei die Mittel zur relativen Verlagerung der Kupplungselemente (50, 51) Folgendes umfassen:
- ein fluidales Stellglied (192) zur Verlagerung des beweglichen Lagers (186) des Lagerblocks des Kupplungselements (50), das auf dem Kopplungsträger (150) montiert ist,
- elastische Mittel (199), die zwischen dem festen Lager (198) und dem beweglichen Lager (195) des Lagerblocks des Kupplungselements (51) positioniert sind, das auf dem gekoppelten Träger (151) montiert ist.

6. Kopplungsvorrichtung nach Anspruch 4, **dadurch gekennzeichnet, dass** nur der Lagerblock (70, 86) des Kupplungselements, das auf dem Kopplungsträger montiert ist, in ein Lager (86), das gegenüber einer translatorischen Bewegung entlang der Längsachse (x) fest ist, und in ein Lager (70), das für eine translatorische Bewegung entlang der Längsachse (x) beweglich ist, unterteilt ist, wobei die Mittel zur relativen Verlagerung der Kupplungselemente (50, 51) ein fluidales Stellglied (89), das einem Fluidspeicher zugeordnet ist, umfassen.

7. Kopplungsvorrichtung nach einem der vorherigen Ansprüche, **dadurch gekennzeichnet, dass** jedes Kupplungselement (50, 51) frei drehbar um eine vertikale Achse (z) im Verhältnis zum entsprechenden Träger (8, 9; 150, 151) montiert ist.

8. Kopplungsvorrichtung nach einem der Ansprüche 4 bis 6 und Anspruch 7 zusammengenommen, **dadurch gekennzeichnet, dass** jeder Lagerblock (70, 86, 110; 186, 189, 195, 198) um eine der zwei nachfolgenden Achsen, nämlich die vertikale Achse (z) oder die Querachse (y), frei drehbar im Inneren eines ringförmigen Gehäuses (94, 115; 179) montiert ist, das für eine translatorische Bewegung entlang einer vertikalen Achse (z) beweglich und frei drehbar um die zweite der zwei Achsen, nämlich Querachse (y) oder vertikale Achse (z), im Verhältnis zum entsprechenden Träger (8, 9; 150, 151) ist.

9. Kopplungsvorrichtung nach einem der vorherigen Ansprüche, **dadurch gekennzeichnet, dass** jedes Kupplungselement (50, 51) entlang einer Querachse (y) im Verhältnis zum entsprechenden Träger (8, 9; 150, 151) frei translatorisch beweglich montiert ist, wobei der Träger elastische Mittel (101, 117; 175, 176) umfasst, die beiderseits entlang der Querachse (y) des Kupplungselements angeordnet sind, sodass sie in einer Position halten, die bei Abwesenheit einer Querbelastung im Verhältnis zum Träger (8, 9; 150, 151) im Wesentlichen zentriert ist.

10. Kopplungsvorrichtung nach Anspruch 8 und Anspruch 9 zusammengenommen, **dadurch gekennzeichnet, dass**:
- jeder Lagerblock (186, 189, 195, 198) frei drehbar um eine Querachse (y) im Inneren des ringförmigen Gehäuses (179) montiert ist,
- jedes ringförmige Gehäuse (179) frei drehbar um eine vertikale Achse (z) relativ zu zwei Drehzapfen (177, 178) montiert ist:
• jeweils frei translatorisch beweglich entlang eines Querträgers (171) eines Rahmens (167), der mit Pfosten (168, 169) versehen ist, die verschiebbar entlang von Säulen (165, 166) montiert sind, die sich entlang vertikaler Achsen (z) erstrecken, drehfest verbunden mit dem entsprechenden Träger (150, 151),
• mittels Federn (175, 176), die um die Querträger (171) beiderseits der Drehzapfen angeordnet sind, in einer zentrierten Position zwischen den zwei Pfosten (168, 169) gehalten.

11. Kopplungsvorrichtung nach Anspruch 10, **dadurch gekennzeichnet, dass** sie Mittel zum Halten des Lagerblocks (195, 198) des auf dem gekoppelten Träger (151) montierten Kupplungselements (51) in einer stabilen Position, die zumindest im Wesentlichen nach der Längsachse (x) in der ausgekoppelten Position des Kupplungselements ausgerichtet ist, umfasst, wobei die Mittel zum Halten umfassen:
- eine entlang der Längsachse (x) relativ zum Lagerblock (195, 198) bewegliche Baugruppe, die drehverbunden mit dem Lagerblock ist und, beiderseits des ringförmigen Gehäuses (179) angeordnet und durch Längsverbindungselemente (202, 203) verbunden ist, umfasst:
• ein frontales, einklappbares Teil (201), das dazu eingerichtet ist, vom auf dem Kopplungsträger (150) montierten Kupplungselement (50) bei der Verlagerung des Letzteren in Richtung der eingekoppelten Position der Kupplungselemente (50, 51) weggedrückt zu werden,
• eine Anschlagplatte (205), die eingerichtet ist, sodass sie im Anschlag am ringförmigen Gehäuse (179) anliegt und in der ausgekoppelten Position der Kupplungselemente (50, 51) das Schwenken der beweglichen Baugruppe und des Lagerblocks (195, 198) relativ zum ringförmigen Gehäuse unterbindet und um sich in einem Abstand beabstandet vom ringförmigen Gehäuse (179) zu befinden, der in der eingekoppelten Position der Kupplungselemente das Schwenken des Lagerblocks (195, 198) erlaubt,
- elastische Mittel (204), die angeordnet sind, um die bewegliche Baugruppe (201-203, 205) in Richtung ihrer Stabilisierungsposition für die Drehung des Lagerblocks (195, 198) im Verhältnis zum ringförmigen Gehäuse (179) belasten und um die Verlagerung der beweglichen Baugruppe bei der Verlagerung des am Kopplungsträger (150) montierten Kupplungselements (50) in Richtung der eingekoppelten Position der Kupplungselemente (50, 51) zu erlauben.

12. Kopplungsvorrichtung nach Anspruch 11, **dadurch gekennzeichnet, dass** das frontale einklappbare Teil (201) eingerichtet ist, sodass es durch elastische Mittel (204) der beweglichen Baugruppe (201-203, 205) in einer Position gehalten wird, die vom beweglichen Lager (195) des Lagerblocks (195, 198) des auf dem gekoppelten Träger (151) montierten Kupplungselements (51) beabstandet ist, und um bis in eine Anschlagsposition am beweglichen Lager weggedrückt zu werden.

13. Kopplungsvorrichtung nach Anspruch 8 und Anspruch 9 zusammengenommen, **dadurch gekennzeichnet, dass**:
- jeder Lagerblock (70, 86, 110) frei drehbar um eine vertikale Achse (z) im Inneren des ringförmigen Gehäuses (94, 115) montiert ist,
- jedes ringförmige Gehäuse (94, 115) zwei koaxiale Stützwellen (99, 100, 116) umfasst, die frei drehbar um eine Querachse (y) im Verhältnis zum entsprechenden Träger (8, 9) montiert sind, sich entlang einer gleichen Querachse (y) beiderseits des ringförmigen Gehäuses seitlich erstrecken und um die jeweils eine Rückstellfeder (101, 117) zum Rückstellen des ringförmigen Gehäuses (94, 115) in Richtung seiner im Verhältnis zum Träger (8, 9) im Wesentlichen zentrierten Position angeordnet ist.

14. Kopplungsvorrichtung nach Anspruch 13, **dadurch gekennzeichnet, dass** jedes ringförmige Gehäuse (94, 115) in einem Rahmen (95, 118) angeordnet ist, der mit Pfosten (96, 119) versehen ist, in denen jeweils eine Stützwelle (99, 100, 116) des ringförmigen Gehäuses drehbar montiert ist, wobei die Pfosten verschiebbar entlang von Schienen (25, 26, 47) montiert sind, die sich entlang vertikaler Achsen (z) erstrecken, drehfest verbunden mit dem entsprechenden Träger (8, 9).

15. Kopplungsvorrichtung nach einem der vorherigen Ansprüche, **dadurch gekennzeichnet, dass** die Kupplungselemente (50, 51) aus Klauenkupplungselementen bestehen, die mit Fehlervermeidungseinrichtungen versehen sind.

16. Kopplungsvorrichtung nach Anspruch 15, **dadurch gekennzeichnet, dass** die Kupplungselemente (50, 51) die Form von Zahnkränzen (52, 53) aufweisen, die mit einer frontalen Fläche (52a, 53a) versehen sind, in der Kupplungszähne (64-66) bereitgestellt sind.

17. Kopplungsvorrichtung nach einem der Ansprüche 11 oder 12 und Anspruch 16 zusammengenommen, **dadurch gekennzeichnet, dass**:
- das frontale einklappbare Teil aus einem Zentrierungskegel (201), nämlich einem Außenkegel oder einem Innenkegel, besteht, der mit einer Basis versehen ist, die dazu ausgelegt ist, den Zahnkranz (53) des auf dem gekoppelten Träger (151) montierten Kupplungselements (51) zu umgeben,
- das auf dem Kopplungsträger (150) montierte Kupplungselement (50) einen komplementären Zentrierungskegel (188), nämlich einen Innenkegel oder einen Außenkegel, umfasst, der mit einer den Zahnkranz (52) des Kupplungselements umgebenden Basis versehen ist, der dazu ausgelegt ist, um mit dem Zentrierungskegel (201) des gekoppelten Trägers (151) zusammenzuwirken und diesen wegzudrücken.

18. Kopplungsvorrichtung nach Anspruch 16, **dadurch gekennzeichnet, dass** sie einen sogenannten äußeren Zentrierungskegel (82) umfasst, der mit einer Basis (81) versehen ist, die einen der Kupplungselemente (50) bildenden Zahnkranz (52) umgibt, der dazu ausgelegt ist, die äußere Führung und die Zentrierung des anderen Kupplungselements (51) bei der Einkopplung der Kupplungselemente sicherzustellen.

19. Kopplungsvorrichtung nach einem der Ansprüche 16 oder 18, **dadurch gekennzeichnet, dass**:
- einer der ein Kupplungselement (50) bildenden Zahnkränze (52) einen zentralen Bereich aufweist, in deren axialer Verlängerung sich ein sogenannter innerer Zentrierungskegel (83) erstreckt,
- der zweite Zahnkranz (53) einen hohlen zentralen Bereich (130, 131) aufweist, der eine Längsbohrung mit konischer Form, die mit der des inneren Zentrierungskegels (83) zusammenwirkt, begrenzt, der dazu ausgelegt ist, die Führung und Zentrierung sicherzustellen.

20. Kopplungsvorrichtung nach Anspruch 19, **dadurch gekennzeichnet, dass** der innere Zentrierungskegel (83) eine zylindrische Basis (84) in der Verlängerung des zugeordneten Zahnkranzes (52) umfasst, die dazu ausgelegt ist, eine zylindrische Auflagefläche für einen Abschnitt mit zylindrischem Ende (131) der durch den anderen Zahnkranz (53) begrenzten Bohrung (130, 131) zu bilden.

21. Kopplungsvorrichtung nach einem der vorherigen Ansprüche, **dadurch gekennzeichnet, dass** jede Antriebswelle (58, 59) aus einer Teleskopwelle besteht, die aus zwei Teleskopelementen zusammengesetzt ist, bestehend aus:
- einem sogenannten Steckelement (60, 61), das mit einem Gelenkelement (62, 63) für die Verbindung mit jeweils der Zapfwelle (2) der Maschine (1) und der Abtriebswelle (4) des Werkzeugs (3) ausgestattet ist,
- einem sogenannten Buchsenelement (50, 51), das unter anderem das Kupplungselement bildet.

22. Kopplungsvorrichtung nach den Ansprüchen 16 und 21 zusammengenommen, **dadurch gekennzeichnet, dass**:
- jedes Steckteleskopelement aus einer Keilwelle (60, 61) besteht,
- jedes Buchsenteleskopelement aus einer gekerbten Hülse (50, 51) besteht, die einstückig mit dem Zahnkranz (52, 53) ist, der das zugeordnete Kupplungselement bildet.

## Claims

1. A device for coupling a tool (3) such as an agricultural implement on a lifting system (5) of a machine (1), such as an agricultural tractor, equipped with a power take-off (2), comprising:
- two frames consisting of a frame (8; 150), called coupling frame, with fasteners (16, 21) in the lift system (5) of the machine (1) and a frame (9; 151), called coupled frame, with fasteners (36, 37, 41, 42) on the tool (3) adapted to extend transversely respectively to the machine (1) and the tool (3), said coupling frame and coupled frame defining junction surfaces (8a, 9a) adapted to allow same to pair together and having means (14, 38; 156-160) for relative locking in the said paired position,
- transmission means comprising:
-- coupling members (50, 51) complementary respectively mounted on the coupling frame (8; 150) and on the coupled frame (9; 51) by way of relative movement means (89; 192, 199) of said coupling members according to an axis called longitudinal (x), perpendicular to the junction surfaces (8a, 9a) adapted to move between a disengaged position and an engaged position, in the paired position of the two frames (8, 9; 150, 151),
-- transmission members (58, 59, 62, 63) connecting the coupling members (50, 51) respectively to the power take-off (2) of the machine (1) and the driven shaft (4) of the tool (3),
said coupling device being **characterised in that**:
- the two coupling members (50, 51) are respectively mounted on the coupling frame (8; 150) and on the coupled frame (9; 151) so as to be:
-- mobile in translation along an axis called vertical (z) extending in a direction at least substantially vertical in one position of the frame (8, 9; 150, 151) in which the joining face (8a, 9a) thereof extends in a plane at least substantially vertical,
-- free to rotate about an axis called transverse (y) forming an orthogonal coordinate system with the longitudinal axis (x) and the vertical axis (z),
- means for pre-positioning (104-108, 122-125; 170) of each coupling member (50, 51) along a vertical axis (z), are adapted to:
-- maintain, in the disengaged position of the two coupling members (50, 51), each of said coupling members in a predetermined position along the vertical axis (z), adapted for same to engage in the paired position of the two frames (8, 9; 150, 151),
-- allow for, in the engaged position of the coupling members (50, 51), deflections of said coupled coupling members along the vertical axis (z), and inclinations of the latter about the transverse axis (y)
- the transmission members comprise, associated with each coupling member (50, 51), a transmission shaft (58, 59) of a freely variable length with a hinge member (62, 63) for the junction thereof, respectively, to the power take-off (2) of the machine (1) and the driven shaft (4) of the tool (3) and rigidly attached to the associated coupling member (50, 51).

2. A coupling device according to claim 1 **characterised in that** the prepositioning means comprise elastic means (105, 107, 122, 124; 170) mounted on each frame (8, 9; 150, 151) and arranged to hold each coupling member (50, 51) in a predetermined position along the vertical axis (z) of prepositioning said coupling member, and to deform elastically in order to allow for, in the engaged position thereof, the displacements of the coupling members (50, 51) along the vertical axis (z).

3. A coupling device according to claim 2 **characterised in that** it comprises interchangeable chocking means (108, 125) adapted to be interposed along the vertical axis (z) between each frame (8, 9) and the elastic means (105, 107, 122, 124; 170) for prepositioning each coupling member (50, 51) for adjusting the initial prepositioning height of said coupling member.

4. A coupling device according to one of the preceding claims **characterised in that** each coupling member (50, 51) is rotatably mounted in a support block (70, 86, 110; 186, 189, 195, 198), at least one of said support blocks (70, 86; 186, 189, 195, 198) being divided into a support member (86; 189, 198) fixed in translation along the longitudinal axis (x) and a support member (70; 186, 195) mobile in translation along the longitudinal axis (x), wherein the associated coupling member (50, 51) is rotatably mounted, the means for relative displacement of the coupling members (50, 51) consisting of means (89; 192, 199) of translational movement of each of said movable support members.

5. A coupling device according to claim 4 **characterised in that** the two support blocks (186, 189, 195, 198) are divided into a support member (189, 198) fixed in translation along the longitudinal axis (x) and a support member (186, 195) mobile in translation along the longitudinal axis (x), the means for relative displacement of the coupling members (50, 51) comprising:
- a fluid actuator (192) for moving the movable support (186) of the coupling member of the supporting block (50) mounted on the coupling frame (150),
- elastic means (199) positioned between the fixed support (198) and the movable support (195) of the support block of the coupling member (51) mounted on the coupled frame (151).

6. A coupling device according to claim 4 **characterised in that** the single support block (70, 86) of the coupling member mounted on the coupling frame is divided into a support member (86) fixed in translation in the longitudinal axis (x) and a support member (70) mobile in translation along the longitudinal axis (x), the means for relative displacement of the coupling members (50, 51) comprising a fluid actuator (89) associated with a fluid accumulator.

7. A coupling device according to one of the preceding claims **characterised in that** each coupling member (50, 51) is mounted to rotate freely about a vertical axis (z) relative to the corresponding frame (8, 9; 150, 151).

8. A coupling device according to one of claims 4 to 6 and claim 7 taken together, **characterised in that** each support block (70, 86, 110; 186, 189, 195, 198) is mounted free in rotation about one of the following two axes, vertical axis (z) and transverse axis (y), within an annular cage (94, 115; 179) movable in translation along a vertical axis (z) and free in rotation about the second of the two axes, transverse axis (y) or vertical axis (z), relative to the corresponding frame (8, 9; 150, 151).

9. A coupling device according to one of the preceding claims **characterised in that** each coupling member (50, 51) is mounted free in translation along a transverse axis (y) relative to the corresponding frame (8, 9; 150, 151), said frame comprising elastic means (101, 117; 175, 176) arranged on either side of said coupling member along the transverse axis (y), so as to maintain same in a substantially centred position relative to the frame (8, 9; 150, 151) in the absence of transverse stress.

10. A coupling device according to claim 8 and claim 9 taken together **characterised in that**:
- each said support block (186, 189, 195, 198) is mounted to rotate freely about a transverse axis (y) within the annular cage (179),
- each annular cage (179) is mounted to rotate freely about a vertical axis (z) on two pivots (177, 178):
-- each free in translation along a crosspiece (171) of a frame (167) having uprights (168, 169) mounted to slide along columns (165, 166) extending along the vertical axis (z), integral with the corresponding frame (150, 151),
-- maintained in a centred position between the two uprights (168, 169) by means of springs (175, 176) arranged around the cross members (171) on either side of said pivots.

11. A coupling device according to claim 10 **characterised in that** it comprises means for holding the support block (195, 198) of the coupling member (51) mounted on the coupled frame (151) in a stable position at least substantially centred with respect to the longitudinal axis (x), in the disengaged position of said coupling member, said holding means comprising:
- a assembly movable along the longitudinal axis (x) relative to the support block (195, 198) rotatably connected to said supporting block, and comprising, arranged on either side of the annular cage (179) and connected by longitudinal connecting members (202, 203),
-- a retractable front piece (201) arranged to be pushed by the coupling member (50) mounted on the coupling frame (150) upon movement of the latter towards the engaged position of the coupling members (50, 51),
-- an abutment plate (205) arranged to be contiguous in abutment against the annular cage (179) and to prohibit pivoting of the mobile assembly and the support block (195, 198) relatively to said annular cage, in the disengaged position of the coupling members (50, 51) and to be spaced from the annular cage (179) by a distance permitting the pivoting of the support block (195, 198) in the engaged position of said coupling members,
- elastic means (204) arranged so as to exert force on the movable assembly (201-203, 205) toward the stabilized position thereof in rotation about the support block (195, 198) relative to the annular housing (179), and to allow the movement of said movable assembly upon movement of the coupling member (50) mounted on the coupling frame (150) toward the engaged position of the coupling members (50, 51).

12. A coupling device according to claim 11 **characterised in that** the retractable front piece (201) is arranged to be held by the elastic means (204) of the movable assembly (201-203, 205), in a position separated from the movable support (195) of the support block (195, 198) of the coupling member (51) mounted on the coupled frame (151), and to be pushed to a stop position against said mobile support.

13. A coupling device according to claim 8 and claim 9 taken together **characterised in that**:
- each support block (70, 86, 110) is mounted to rotate freely about a vertical axis (z) inside the annular cage (94, 115),
- each annular cage (94, 115) comprises two coaxial support shafts (99, 100, 116) mounted to rotate freely about a transverse axis (y) relative to the corresponding frame (8, 9) extending laterally along the same transverse axis (y) on both sides of said annular cage, and around each of which is arranged a spring (101, 117) for returning the annular cage (94, 115) towards its substantially centred position relative to the frame (8, 9).

14. A coupling device according to claim 13 **characterised in that** each annular cage (94, 115) is arranged in a frame (95, 118) having uprights (96, 119) in each of which a support shaft (99, 100, 116) of said annular housing is rotatably mounted, said legs being slidably mounted along rails (25, 26, 47) extending along the vertical axis (z), rigidly attached to the corresponding frame (8, 9).

15. A coupling device according to one of the preceding claims **characterised in that** the coupling elements (50, 51) consist of dog clutch coupling members equipped with indicators.

16. A coupling device according to claim 15 **characterised in that** the coupling members (50, 51) have the form of ring gears (52, 53) with a front face (52a, 53a) in which coupling teeth (64-66) are formed.

17. A coupling device according to one of claims 11 or 12 and claim 16 taken together **characterised in that**:
- the retractable front part consists of a male or female centring cone (201) with a base adapted to surround the ring gear (53) of the coupling member (51) mounted on the coupled frame (151),
- the coupling member (50) mounted on the coupling frame (150) has a complementary female or male centring cone (188), having a base surrounding the ring gear (52) of said coupling member, adapted to engage and push the centring cone (201) of the coupled frame (151).

18. A coupling device according to claim 16 **characterised in that** it comprises a centring cone (82), called external centring cone, having a base (81) surrounding the ring gear (52) constituting one of the coupling members (50) adapted to ensure the external guiding and the centring of the other coupling member (51) during engagement of said coupling members.

19. A coupling device according to one of claims 16 or 18 **characterised in that**:
- one of the ring gears (52) made up of a coupling member (50) has a central zone in the axial extension from which a centring cone (83), called inner centring cone, extends,
- the second ring gear (53) has a recessed central region (130, 131) defining a cone-shaped longitudinal bore matching that of the inner centring cone (83) adapted for guiding and centring.

20. A coupling device according to claim 19 **characterised in that** the internal centring cone (83) has a cylindrical base (84) in the extension of the associated ring gear (52), adapted to form a cylindrical bearing for a cylindrical end section (131) of the bore (130, 131) defined by the other ring gear (53).

21. A coupling device according to one of the preceding claims **characterised in that** each transmission shaft (58, 59) consists of a telescopic shaft made up of two telescopic elements comprising:
- an element (60, 61), called male element, equipped with a hinge member (62, 63) for connection to respectively the power take-off (2) of the machine (1) and the driven shaft (4) of the tool (3),
- an element (50, 51), called female element, further forming the coupling member.

22. A coupling device according to claims 16 and 21 taken together **characterised in that**:
- each male telescopic member comprises a splined shaft (60, 61),
- each female telescopic member comprises a splined sleeve (50, 51) integral with the ring gear (52, 53) forming the associated coupling member.
